# EUROPEAN PATENT APPLICATION

(11) **EP 4 834 975 A1**
(43) Date of publication of application: **04.11.2026**
(21) Application number: 24912664.0
(22) Date of filing: 20.12.2024
(51) Int. Cl.: C08G 77/46, C08G 77/388, C11D 1/72, C11D 3/20, C11D 3/37, C11D 3/48, C11D 3/386, C11D 17/08

(54) **NOVEL CO-MODIFIED SILICONE, CO-MODIFIED SILICONE COMPOSITION CONTAINING SAME, LIQUID DETERGENT CONTAINING SAME, AND METHOD FOR PRODUCING SAME**

(30) Priority: 25.12.2023 JP 2023217515
(71) Applicant: Dow Toray Co., Ltd., Tokyo 140-8617 (JP)
(72) Inventor: TAMURA, Seiki, Ichihara-shi Chiba 299-0108 (JP); KISHIMOTO, Norihisa, Ichihara-shi Chiba 299-0108 (JP)
(74) Representative: Elkington and Fife LLP
(86) International application number: PCT/JP2024/045178
(87) International publication number: WO 2025/142775

(57) **Abstract**

PROBLEM

To provide: a co-modified silicone having amino/amide/two-type polyether groups in a molecule that can be obtained with stable quality and high purity, and maintain low viscosity, making it highly useful as a raw material for a liquid cleaning agent; and the like.

SOLUTION

A co-modified silicone compound and a composition thereof, the compound being expressed by the following average chemical structural formula: MDₚD^{(AM)}_{q}D^{(AMD)}ᵣD^{(PE1)}ₛD^{(PE2)}_{w}M^{OR'} Tx (1) [where M represents an R₃SiO_{1/2} unit, D^{(AM)} represents an RR¹SiO unit, D^{(AMD)} represents an RR²SiO unit, D^{(PE1)} represents an RR³SiO unit, D^{(PE2)} represents an RR⁸SiO unit, M^{OR'} represents an R₂(OR')SiO_{1/2} unit, the relationship of 50 ≤ p + q + r + s + w ≤ 160 is satisfied, x is 0 to 1, the molar ratio M:M^{OR'} is 1.7:0.3 to 1.2:0.8, R represents an alkyl group, R¹ represents an aminoalkyl group, R² represents a group expressed by -R⁴-NHCO-(CH₂)_{b}-O(C₂H₄O)_{c}-R⁵, R³ represents a first polyether group, R⁸ represents a second polyether group, and when the total number of moles of M and M^{OR'} is 2.0, the total number of moles of carboxylate groups and acyloxy groups in a molecule is 1.0 or less.

## Description

### TECHNICAL FIELD

The present invention relates to: a novel co-modified silicone containing high-purity amino/amide/two different polyether groups with excellent viscosity and appearance stability; a co-modified silicone composition containing the same; a liquid cleaning agent containing the same; and a method for manufacturing the co-modified silicone/composition thereof. The silicone, particularly when incorporated into a liquid cleaning agent with a transparent appearance, does not impair transparency and can be used as a softener component, fiber lubricant component, texture-improving component, or fiber surface coating component. Furthermore, the composition has low viscosity and excellent handling properties when manufacturing a transparent liquid cleaning agent. In addition, the co-modified silicone and composition thereof according to the present invention are of high purity and contain few impurities derived from raw materials and the like, and therefore, the amount that can be incorporated into a transparent liquid cleaning agent be increased, which has the advantage of enhancing the commercial appeal of the transparent liquid cleaning agents.

### BACKGROUND ART

Several reports have been published to date regarding amide polyether group-containing silicones, analogues thereof, and applications thereof. However, there was no mention of quality issues with amide polyether group-containing silicones, and neither a practical, quality-stable silicone nor a method for manufacturing such a silicone was known. Furthermore, no method for manufacturing this silicone in high purity was known.

Patent Document 1 reports a fiber treatment agent composition containing a specific ratio of (A) an amino group-containing organopolysiloxane (amino-modified silicone) and (B) a polyether group-containing carboxylic acid. The composition can be prepared by simply mixing (A) and (B) uniformly, but mixing while heating at 40 to 180°C is preferable. Furthermore, component (B) is indicated to form a salt with the amino group of component (A), or, depending on heating conditions, form an amide bond.

Patent Document 2 reports a cleaning agent composition containing (a) 5 to 70 wt.% of a surfactant and (b) 0.05 to 5 wt.% of an amide polyether group-containing silicone. The examples disclose a cleaning agent composition that contains a secondary amino/amide polyether co-modified silicone [silicone (1)] having a structure in which both terminals of a polysiloxane main chain are blocked with trimethylsilyl groups. However, there was no description of a method for manufacturing said component (b).

Patent Document 3 reports a specific liquid cleaning agent composition containing (a) 0.05 to 5 wt.% of a specific amino-modified silicone derivative that further contains an amide polyether group and another polyether group, and (b) 5 to 70 wt.% of a surfactant {of which 95 to 75 wt.% is (i) a specific nonionic surfactant having an HLB value of 12 to 15, and 5 to 15% is (ii) a specific nonionic surfactant having an HLB value of 7 to 10 and having a narrow ethylene oxide addition molar number distribution}, the liquid cleaning agent composition having a specified (a)/(b) weight ratio. The examples disclose a liquid cleaning agent composition that contains a primary amino/amide polyether/polyether composite-modified silicone [silicone (1)] having a structure in which both terminals of a polysiloxane main chain are blocked with trimethylsilyl groups. However, there was no description of a method for manufacturing said silicone.

Patent Document 4 reports that, regarding a light cleaning agent containing an amino-modified silicone amide described in Patent Document 2, the cleaning agent composition was not sufficiently stable, exhibiting issues such as yellowing and separation during storage.

Patent Document 5 reports a composition containing (A) an amide polyether-modified organopolysiloxane (an amide polyether-modified silicone that does not contain an amino group) and (B) a polyoxyethylene alkyl ether fatty acid (a polyether group-containing carboxylic acid) in a prescribed ratio. In the manufacturing of the composition, component (B) is used in an amount equal to or greater than the reaction equivalent during the amidation reaction. In Reference Example 1, a mixture of an amino-modified organopolysiloxane having a structure in which both terminals are blocked with trimethylsilyl groups and polyoxyethylene (4) lauryl ether acetate [component (B)] was reacted at 150°C for two hours to obtain a composition containing an amide polyether-modified silicone with both terminals blocked with trimethylsilyl and 5.4 wt.% of component (B). However, there were no reports regarding the quality stability, appearance, viscosity, or the like of the composition itself in Reference Example 1.

Patent Document 6 reports a delicate clothing cleaning agent composition containing (a) a nonionic surfactant, (b) monoethanolamine, (c) a specific carboxylic acid with a molecular weight of 100 to 500, and (d) an amino-modified silicone, with specified mass ratios of (a), (b), and (c), pH, and the like. The examples disclose a delicate clothing cleaning agent composition that contains a primary amino/amide polyether/polyether composite-modified silicone [amino-modified silicone 1] having a structure in which both terminals of a polysiloxane main chain are blocked with trimethylsilyl groups. However, there was no description of a method for manufacturing said silicone.

Patent Document 7 discloses a treatment agent for a wiping paper, the agent containing an amide polyether group-containing polyorganosiloxane. The composition may further contain a surfactant, a polyhydric alcohol, water, and the like, but the surfactant is used in small amounts mainly to emulsify the polyorganosiloxane, and the resulting composition is different from a cleaning agent. There is no description or suggestion whatsoever regarding the application thereof to a cleaning agent. In Reference Example 1, a mixture of a polyoxyethylene (4,5) lauryl ether acetate and an organopolysiloxane containing an amino group and polyether group was reacted at 130°C for two hours to obtain a primary amino/amide polyether/polyether composite-modified silicone [amide polyether group-containing organopolysiloxane (viscosity 1000 mPa·s)] having a structure in which both terminals of a polysiloxane main chain are blocked with trimethylsilyl groups. However, there were no reports regarding the quality stability and appearance of the polysiloxane in Reference Example 1.

Patent Documents 8 and 9 report a transparent laundry cleaning agent composition using a quaternary ammonium type cationic surfactant as a softener component. Patent Document 11 reports a liquid cleaning agent composition with improved transparency, the composition containing a specific organic cationic polymer having a quaternary ammonium salt structure as a softener component.

Patent Document 10 reports a liquid cleaning agent composition containing (A) a specific nonionic surfactant, (B) 1 to 40 mass% of an anionic surfactant (excluding higher fatty acid salts) containing linear alkylbenzene sulfonic acid and polyoxyethylene ether sulfate, and (C) a silicone having at least one modifying group selected from amino-modified groups and amide-modified groups, as well as a polyether-modified group in the structure thereof. The liquid cleaning agent compositions obtained in the examples had a uniform appearance, but it was uncertain whether the compositions were transparent. Furthermore, the manufacturing method and chemical structure of component (C) were not fully understood.

In other words, although there are brief descriptions of methods for manufacturing amide polyether group-containing silicones in Patent Documents 1, 5, and 7, no information other than simply heating and mixing the raw materials, an amino group-containing silicone and a polyether group-containing carboxylic acid, for a certain period of time was known. Furthermore, none of Patent Documents 1 to 11 mentioned any quality issues related to amide polyether group-containing silicones themselves. Patent Documents 2 to 4 and 6 each disclose a cleaning agent composition containing an amide polyether group-containing silicone having a structure in which both terminals of a polysiloxane main chain are blocked with trimethylsilyl groups, but it was unclear how the silicone was specifically manufactured.

The present inventors have discovered that amide polyether group-containing silicones obtained by previously reported manufacturing methods have several unreported problems, including: (i) being obtainable only as low-purity compositions; (ii) having a high cyclic dimethylsiloxane amount; (iii) having unstable properties or composition appearance and becoming non-transparent during storage despite being a transparent liquid immediately after manufacturing; and (iv) experiencing a significant increase in composition viscosity during storage. Furthermore, the present inventors have discovered that it is extremely difficult to accurately manufacture amide polyether group-containing silicones having a structure in which both terminals of a polysiloxane main chain are blocked with trimethylsilyl groups. In other words, the cleaning agent compositions of Patent Documents 2 to 4 and 6 have the problem that the compositions cannot be accurately manufactured using amide polyether group-containing silicone as a raw material, or that there is no known practical means for accurately reproducing the compositions.

As described above, past related documents have failed to recognize the quality issues of amide polyether group-containing silicones. Therefore, there is no description or suggestion whatsoever regarding a practical and quality-stable silicone, or a method for manufacturing such a quality-stable silicone. Furthermore, there is no description or suggestion whatsoever regarding a method for manufacturing the silicone in question in high purity. Furthermore, a co-modified silicone and composition thereof having two additional different polyether groups in one molecule, in addition to amino groups and amide polyether groups, are novel and not disclosed in these documents. Moreover, these documents do not describe or suggest any technical effects or advantages derived from this structure or the like.

### RELATED ART DOCUMENTS

### Patent Documents

Patent Document 1: JPH07-122222 B (US 4973620)
Patent Document 2: JP H03-207798 A
Patent Document 3: JP 2863137 B
Patent Document 4: JP 3299865 B
Patent Document 5: JP H11-5903 A (US 5965649)
Patent Document 6: JP 4166564 B
Patent Document 7: JP 5702926 (US 8802239)
Patent Document 8: US 5622925 (JP 2968340 B)
Patent Document 9: EP 862609
Patent Document 10: JP 6956712 B
Patent Document 11: US 11505766

### SUMMARY OF THE INVENTION

### PROBLEM TO BE SOLVED BY THE INVENTION

As described above, amide polyether group-containing silicones have several unreported problems, including: (i) being obtainable only as low-purity compositions; (ii) having a high cyclic dimethylsiloxane amount; (iii) having unstable properties or composition appearance and becoming non-transparent during storage despite being a transparent liquid immediately after manufacturing; and (iv) experiencing a significant increase in composition viscosity during storage. Furthermore, examples and the like in past related documents have disclosed a transparent liquid cleaning agent composition containing, as a softener component, texture-improving component, or the like, an amide polyether group-containing silicone having a structure in which both terminals of a polysiloxane main chain are blocked with trimethylsilyl groups. However, it has not been possible to industrially manufacture such silicones with favorable reproducibility, and co-modified silicones having such molecular chain terminals do not adequately solve the problems above. Therefore, further improvements are strongly needed.

The present invention was made to solve the problems above, and an objective thereof is to provide a novel co-modified silicone that is practical and of stable quality, and has an amino/amide/two different polyether-modified group in a molecule. A further object is to provide a co-modified silicone composition that is highly pure, has few impurities, is practical, and has stable quality. A further object of the present invention is to provide a liquid cleaning agent containing the co-modified silicone or composition thereof, and particularly a transparent concentrated liquid cleaning agent for laundering or a transparent liquid cleaning agent with excellent transparency, and to provide a method for manufacturing the co-modified silicone or composition thereof. Note that the co-modified silicone or composition thereof is preferably used in the transparent concentrated liquid cleaning agent for laundering or the transparent liquid cleaning agent as a softener component, a fiber lubricant component, a texture-improving component, or a fiber surface coating component.

### MEANS FOR SOLVING THE PROBLEM

In order to solve the problems above, the present inventors conducted extensive studies and, as a result, discovered the following: a specific amino/amide/two-type polyether composite-modified silicone composition, wherein both terminal moieties of a polysiloxane main chain include an M[R₃SiO_{1/2}] unit and M^{OR'}[R₂(OR')SiO_{1/2}] unit [where R represents an alkyl group (with 1 to 12 carbon atoms), and OR' represents a group selected from hydroxyl groups, alkoxy-group-containing groups, and acyloxy-group-containing groups], the molar ratio of M:M^{OR'} is in the range from 1.7:0.3 to 1.2:0.8, and when the total number of moles of M and M^{OR'} is set to 2.0, the total number of moles of carboxylate groups and acyloxy groups is 1.0 or less, improved transparency in appearance is exhibited with minimal deterioration of transparency over time; the composition exhibits remarkably suppressed viscosity increase during storage as compared to amide polyether group-containing silicones obtained by previously reported manufacturing methods; and even after cyclic dimethylsiloxanes are removed by heating under reduced pressure, the viscosity of the composition remains at a low level, and the composition offers excellent reproducibility of viscosity between batches, which, as a result, simultaneously achieves high purity, favorable handling properties, and production stability. Therefore, the composition is particularly excellent as an additive for transparent liquid cleaning agents and can solve all of the aforementioned complex and intricate problems. Based on these findings, the present inventors arrived at the present invention.

More specifically, the problems to be solved by the present invention are solved by providing the following:
"[1] A co-modified silicone expressed by the following average structural formula:

   MDₚD^{(AM)}_{q}D^{(AMD)}ᵣD^{(PE1)}ₛD^{(PE2)}_{w}M^{OR'} Tx (1)

   [where M represents an R₃SiO_{1/2} unit, D represents an R₂SiO unit, D^{(AM)} represents an RR¹SiO unit, D^{(AMD)} represents an RR²SiO unit, D^{(PE1)} represents an RR³SiO unit, D^{(PE2)} represents an RR⁸SiO unit, M^{OR'} represents an R₂(OR')SiO_{1/2} unit, T represents a siloxy unit expressed by R₃SiO_{3/2}, each p, q, r, s, w is a positive number, the relationship 50 ≤ p + q + r + s + w ≤ 160 is satisfied, x is a number in the range from 0 to 1, and the molar ratio M:M^{OR'} is in the range from 1.7:0.3 to 1.2:0.8;
   R represents an alkyl group with 1 to 12 carbon atoms;
   R¹ represents an aminoalkyl group (1 to 6 carbon atoms);
   R² represents a group expressed by -R⁴-NHCO-(CH₂)_{b}-O(C₂H₄O)_{c}-R⁵ (where R⁴ represents an alkylene group with 1 to 6 carbon atoms, R⁵ represents a monovalent hydrocarbon group with 1 to 18 carbon atoms, b is a number in the range from 1 to 6, and c is a number in the range from 2 to 20);
   R³ represents a group expressed by -R⁶-O-(C₂H₄O)_{d}(C₃H₆O)ₑ-R⁷ (where R⁶ represents an alkylene group with 2 to 8 carbon atoms, R⁷ represents an alkyl group with 1 to 12 carbon atoms, d is a number in the range from 3 to 25, e is a number in the range from 0 to 10, and if e is not 0, the relationship d/e ≥ 7/3 is satisfied);
   R⁸ represents a group expressed by -R⁶-O-(C₂H₄O)_{f} (C₃H₆O)_{g}-R⁷ (where R⁶ and R⁷ are the same groups as above, f and g are numbers from 0 to 4, and the relationship 1 ≤ f + g ≤ 4 is satisfied);
   OR' is a group selected from hydroxyl groups, alkoxy group-containing groups, and acyloxy group-containing groups; and
   furthermore, when the total number of moles of M and M^{OR'} is 2.0, the total number of moles of carboxylate groups and acyloxy groups in a molecule is 1.0 or less].
[2] The co-modified silicone according to [1], wherein the number x of siloxy units expressed by T in the average structural formula (1) is in the range from 0.01 to 0.70.
[3] A co-modified silicone composition containing the co-modified silicone according to [1], and further containing a polyether compound expressed by the following average structural formula:

   Z-O-(C₂H₄O)_{d}(C₃H₆O)ₑ-R⁷ (2)

   [where Z is a group selected from alkenyl groups with 2 to 8 carbon atoms or a hydrogen atom, and R⁷, d, and e are defined as described above],
   in an amount of 5 parts by mass or less with the sum of the co-modified silicone compound and the polyether compound being 100 parts by mass.
[4] The co-modified silicone composition according to [3], wherein the ratio of moles of oxyethylene (C₂H₄O) groups relative to 1 mole of Si-R groups in the composition is in the range from 0.2 to 0.6.
[5] The co-modified silicone composition according to [3], wherein the amount of aminoalkyl groups in the composition is in the range from 0.1 to 0.6 mass%.
[6] The co-modified silicone composition according to [3], wherein the amount of each of a tetra- to hexamer cyclic dimethylsiloxane is 0.1 mass% or less of the total composition.
[7] A liquid cleaning agent, containing the co-modified silicone according to [1] or [2] or the co-modified silicone composition according to any one of [3] to [6].
[8] A liquid cleaning agent according to claim 7, which is a transparent concentrated liquid cleaning agent for laundering or a transparent liquid cleaning agent, wherein the co-modified silicone according to [1] or [2] or the co-modified silicone composition according to any one of [3] to [6] is incorporated as one or more component of a softener component, a fiber lubricant component, a texture-improving component, and a fiber surface coating component.
[9] The liquid cleaning agent according to [7], containing:
   (I) a cleaning organic nonionic surfactant having a polyoxyethylene group (with an average number of oxyethylene repetitions in the range from 3 to 16), in the range from 10 to 60 mass% of the total liquid cleaning agent;
   (II) at least one freezing inhibitor selected from (II-1) to (II-3) below, in the range from 2 to 20 mass% of the total liquid cleaning agent
   (II-1) saturated monohydric alcohols with 2 to 4 carbon atoms,
   (II-2) glycol ethers monosubstituted with an alkyl group with 1 to 6 carbon atoms (provided that the glycol ether contains an oxyethylene group and/or an oxypropylene group, and the number of repetitions thereof is in the range from 1 to 3), and
   (II-3) di- or triol compounds selected from propylene glycol, dipropylene glycol, tripropylene glycol, triethylene glycol, tetraethylene glycol, trimethylene glycol, and glycerin;
   (III) water in the range of 20 to 85 mass% of the total liquid cleaning agent; and
   (IV) the co-modified silicone according to [1] or [2] or the co-modified silicone composition according to any one of [3] to [6], in the range from 0.3 to 3 mass% of the total liquid cleaning agent.
[10] The liquid cleaning agent according to [9], further containing (V) 0.1 to 15 mass% of a stabilizer selected from antibacterial agents (preservatives), hydrotropes, antioxidants, and water softeners (chelating agents) {provided that the total amount of components (I) to (V) is 100 mass%}.
[11] The liquid cleaning agent according to [10], further containing: (VI) 0.1 to 5 mass% of at least one anti-grime redeposition agent (anti-redeposition agent or dispersant); (VII) 0.1 to 6 mass% of a pH adjuster; (VIII) 0.1 to 2 mass% of a formulation of at least one enzyme selected from proteases, lipases, amylases, cellulases, esterases, pectinases, and mannanases; (IX) 1 to 150 ppm of a colorant; and (X) 10 to 6000 ppm of at least one aesthetic quality improver selected from 5 to 6000 ppm of a fragrance {provided that the total amount of (I) to (VIII) is 100 mass%}.
[12] A method for manufacturing the liquid cleaning agent according to [9] to [11] containing the aforementioned components (I) to (IV) and optionally containing the aforementioned components (V) to (X), the method including dissolving the aforementioned components (I) to (VII) by heating and mixing at 40 to 80°C, then cooling to 30°C or lower, and then adding and mixing one or more type of component selected from components (VIII), (IX), and (X) to form a homogenized mixture.
[13] A method for manufacturing the co-modified silicone according to [1] to [2] or the co-modified silicone composition according to any one of [3] to [6], the method including heating and mixing the components below to induce a reaction at 80 to 180°C under reduced pressure and an inert gas flow:
   an amino/two-type polyether co-modified silicone expressed by the following average structural formula:

      MDₜD^{(AM)}ᵤD^{(PE1)}ᵥD^{(PE2)}_{z}M^{OR'} Tx (3)
   [where M represents R₃SiO_{1/2}, D represents R₂SiO, D^{(AM)} represents RR¹SiO, D^{(PE1)} represents an RR³SiO unit, D^{(PE2)} represents an RR⁸SiO unit, M^{OR'} represents R₂(OR')SiO_{1/2}, T represents a siloxy unit expressed by R₃SiO_{3/2}, each t, u, v, z is a positive number, the relationship 50 ≤ t + u + v + z ≤ 160 is satisfied, and x is a number in the range from 0 to 1;
   the molar ratio M:M^{OR'} is in the range from 1.7:0.3 to 1.2:0.8;
   R represents an alkyl group with 1 to 12 carbon atoms;
   R¹ represents an aminoalkyl group with 1 to 12 carbon atoms;
   R³ represents a group expressed by -R⁶-O-(C₂H₄O)_{d}(C₃H₆O)ₑ-R⁷ (where R⁶ represents an alkylene group with 2 to 8 carbon atoms, R⁷ represents an alkyl group with 1 to 12 carbon atoms, d is a number in the range from 3 to 25, e is a number in the range from 0 to 10, and if e is not 0, the relationship d/e ≥ 7/3 is satisfied);
   R⁸ represents a group expressed by -R⁶-O-(C₂H₄O)_{f}(C₃H₆O)_{g}-R⁷ (where R⁶ and R⁷ are the same groups as above, f and g are numbers from 0 to 4, and the relationship 1 ≤ f + g ≤ 4 is satisfied); and
   OR' is a group selected from hydroxyl groups, alkoxy group-containing groups, and acyloxy group-containing groups], and
   a polyether group-containing carboxylic acid expressed by the following average structural formula:

      HOOC-(CH₂)_{b}-O(C₂H₄O)_{c}-R⁵ (4)
   [where R⁵ represents a monovalent hydrocarbon group with 1 to 18 carbon atoms, b is a number in the range from 1 to 6, and c is a number in the range from 2 to 20], wherein
   the reaction is performed such that the molar ratio (reaction ratio) of the aminoalkyl group in the amino/polyether co-modified silicone expressed by formula (3) and the carboxyl group in the polyether group-containing carboxylic acid expressed by formula (4) satisfies the relationship 0.1 ≤ carboxyl group/aminoalkyl group ≤ 1.0.
[14] The manufacturing method according to [13], wherein the number x of siloxy units expressed by T in the average structural formula (3) is in the range from 0.01 to 0.70.
[15] The manufacturing method according to [13], wherein the polyether group-containing carboxylic acid expressed by the average structural formula (4) is reacted in the presence of an aqueous solution or water."

### EFFECT OF THE INVENTION

The novel co-modified silicone and composition thereof according to the present invention have higher purity than an amide polyether-modified silicone prepared by a previously reported manufacturing method, and the quality thereof is stabilized with low viscosity and a reduced cyclic dimethylsiloxane amount, resulting in excellent handling properties and production stability. Specifically, the transparency appearance is improved, deterioration of transparency over time is reduced, and impurities are reduced. As a result, the appearance of the composition remains a transparent liquid from immediately after manufacturing through storage, and there is no increase in viscosity during storage, or if there is, the increase is only to a small degree.

The co-modified silicone and composition thereof according to the present invention are excellent in quality and production stability, making them suitable for commercial use. In particular, when incorporated into a liquid cleaning agent with a transparent appearance, the co-modified silicone and composition thereof have little effect on the transparency and stability, making them suitable for use as a softener component, fiber lubricant component, texture-improving component, fiber surface coating component, or the like. Furthermore, the co-modified silicone composition according to the present invention contains fewer impurities, and therefore, it is possible to increase the amount of the composition added to a transparent liquid cleaning agent, which has the advantage of enhancing the commercial appeal of the transparent liquid cleaning agent.

In addition thereto, the co-modified silicone and composition thereof according to the present invention can be industrially stably manufactured, and solve the complex and intricate problems inherent in existing methods for manufacturing co-modified silicones, with both exhibiting excellent reproducibility of quality. Therefore, by utilizing the manufacturing method according to the present invention, both the industrial production and quality of co-modified silicones can be improved, and the commercial applicability thereof can be further enhanced. In other words, even in inventions relating to such manufacturing methods, it is considered that a high degree of originality compared to prior art, as well as unpredictable and remarkably significant technical effects, can be recognized, particularly from the perspective of the design of the manufacturing conditions.

### DESCRIPTION OF THE PREFERRED EMBODIMENTS

The co-modified silicone and composition containing the same according to the present invention will be described below. The co-modified silicone according to the present invention has an aminoalkyl group (R¹ described later), an amide polyether group (R² described later), and two different polyether groups (R³ and R⁸ described later) in a molecule, and is characterized in that a terminal moieties of a polysiloxane main chain includes an M[R₃SiO_{1/2}] unit and M^{OR'}[R₂(OR')SiO_{1/2}] unit, the molar ratio of M:M^{OR'} of the terminal groups is in the range from 1.7:0.3 to 1.2:0.8, and when the total number of moles of M and M^{OR'} is 2.0, the total number of moles of carboxylate groups and acyloxy groups is 1.0 or less. The co-modified silicone may optionally contain a small amount of T units. Furthermore, the co-modified silicone composition of the present invention preferably contains the co-modified silicone in high purity, and is preferably a high-purity composition in which, when the sum of the co-modified silicone compound and the polyether compound is 100 parts by mass, the amount of a raw material polyether compound having a hydrosilylation-reactive terminal is 5 parts by mass or less.

More specifically, the co-modified silicone according to the present invention is expressed by the following average structural formula:

MDₚD^{(AM)}_{q}D^{(AMD)}ᵣD^{(PE1)}ₛD^{(PE2)}_{w}M^{OR'} Tx (1)

[where M represents an R₃SiO_{1/2} unit, D represents an R₂SiO unit, D^{(AM)} represents an RR¹SiO unit, D^{(AMD)} represents an RR²SiO unit, D^{(PE1)} represents an RR³SiO unit, D^{(PE2)} represents an RR⁸SiO unit, M^{OR'} represents an R₂(OR')SiO_{1/2} unit, T represents a siloxy unit expressed by R₃SiO_{3/2}, each p, q, r, s, w is a positive number, the relationship 50 ≤ p + q + r + s + w ≤ 160 is satisfied, x is a number in the range from 0 to 1, and the molar ratio M:M^{OR'} is in the range from 1.7:0.3 to 1.2:0.8;
R represents an alkyl group with 1 to 12 carbon atoms;
R¹ represents an aminoalkyl group (1 to 6 carbon atoms);
R² represents a group expressed by -R⁴-NHCO-(CH₂)_{b}-O(C₂H₄O)_{c}-R⁵ (where R⁴ represents an alkylene group with 1 to 6 carbon atoms, R⁵ represents a monovalent hydrocarbon group with 1 to 18 carbon atoms, b is a number in the range from 1 to 6, and c is a number in the range from 2 to 20);
R³ represents a group expressed by -R⁶-O-(C₂H₄O)_{d}(C₃H₆O)ₑ-R⁷ (where R⁶ represents an alkylene group with 2 to 8 carbon atoms, R⁷ represents an alkyl group with 1 to 12 carbon atoms, d is a number in the range from 3 to 25, e is a number in the range from 0 to 10, and if e is not 0, the relationship d/e ≥ 7/3 is satisfied);
R⁸ represents a group expressed by -R⁶-O-(C₂H₄O)_{f}(C₃H₆O)_{g}-R⁷ (where R⁶ and R⁷ are the same groups as above, f and g are numbers from 0 to 4, and the relationship 1 ≤ f + g ≤ 4 is satisfied);
OR' is a group selected from hydroxyl groups, alkoxy group-containing groups, and acyloxy group-containing groups; and
furthermore, when the total number of moles of M and M^{OR'} is 2.0, the total number of moles of carboxylate groups and acyloxy groups in a molecule is 1.0 or less].

In the formula, R represents an alkyl group with 1 to 12 carbon atoms, and is industrially preferably a methyl group. R¹ represents an aminoalkyl group with 1 to 12 carbon atoms, and preferably 2 to 6 carbon atoms, and may be a primary or secondary aminoalkyl group, and preferably an aminopropyl group.

R² represents a group expressed as -R⁴-NHCO-(CH₂)_{b}-O(C₂H₄O)_{c}-R⁵, and contains both an amide structure and a polyether structure within a functional group. In the formula, R⁴ represents an alkylene group with 1 to 6 carbon atoms, and preferably a propylene group or a methylpropylene group. R⁵ represents a monovalent hydrocarbon group with 1 to 18 carbon atoms, and preferably an alkyl group with 8 to 16 carbon atoms. b is a number in the range from 1 to 6, and c is a number in the range from 2 to 20.

R³ represents a first polyether group expressed as -R⁶-O-(C₂H₄O)_{d}(C₃H₆O)ₑ-R⁷, where the number of oxyethylene units (C₂H₄O)(d) and the number of oxypropylene units (C₃H₆O)(e) in the functional group satisfy a specific relationship, and may also be a functional group that does not contain an oxypropylene unit (e = 0). Furthermore, the oxyethylene unit and oxypropylene unit of R³ may be in either a random addition structure or a block addition structure. Furthermore, R³ may be a single type, a mixture of a plurality of different polyether groups, or a functional group expressed by the average structural formula of a plurality of polyether groups.

In the formula, R⁶ represents an alkylene group with 2 to 8 carbon atoms, and preferably a propylene group or a methylpropylene group. R⁷ represents an alkyl group with 1 to 12 carbon atoms, and preferably a methyl group. d and e are such that d is a number in the range from 3 to 25, and e is a number in the range from 0 to 10, and when e is not 0, from the perspective of the formulation stability of the co-modified silicone composition according to the present invention in a transparent liquid cleaning agent, the relationship of d and e satisfies the molar ratio d/e ≥ 7/3. If the molar ratio (d/e) is less than 7/3, the proportion of oxypropylene units (C₃H₆O) in the polyether structure becomes excessive. When mixed into a transparent liquid cleaning agent, this may cause turbidity of the liquid cleaning agent due to the cloud point phenomenon when the storage temperature is high, such as during the summer. Note that as described above, e may be 0, in which case R³ represents a functional group containing only an oxyethylene unit in the polyether structure thereof, which is one of the preferred forms in the present invention.

R⁸ represents a second polyether group expressed as -R⁶-O-(C₂H₄O)_{f}(C₃H₆O)_{g}-R⁷, in which the sum of the number of oxyethylene units (C₂H₄O)(f) and the number of oxypropylene units (C₃H₆O)(g) in the functional group, and the relationship thereof, differs from that of the first polyether group (R³) described above. Specifically, f and g are numbers from 0 to 4, and satisfy the relationship 1 ≤ f + g ≤ 4. The coexistence of these two different polyether groups in a molecule is a structural feature of the co-modified silicone according to the present invention.

In the formula, p, q, r, s, x, and w represent the number of siloxy units, and the sum thereof corresponds to the degree of siloxane polymerization of the co-modified silicone compound according to the present invention. Moreover, the relationship 50 ≤ p + q + r + s + w ≤ 160 is satisfied, and x is a number in the range from 0 to 1. If p + q + r + s is less than 50, when incorporated into a transparent liquid cleaning agent, the effects as a softener component, fiber lubricant component, texture-improving component, or fiber surface coating component may be less noticeable. On the other hand, when p + q + r + s + w exceeds 160, the formulation stability in transparent liquid cleaning agent tends to decrease. This necessitates measures such as increasing the amount of component (II) to be described later to improve solubility, or selecting a component (I) that has a compatibility effect to be used in the formulation. This may lead to increased difficulty and cost in designing the formulation of transparent liquid cleaning agent.

x is the number of branched siloxy units expressed by T(R₃SiO_{3/2}), which is an arbitrary structural unit of the co-modified silicone compound according to the present invention, and is a number in the range from 0 to 1, and preferably in the range from 0 to 0.7. In particular, when a siloxy unit represented by T is included, x is preferably in the range from 0.01 to 0.70. If the co-modified silicone compound according to the present invention contains a siloxy unit expressed as T(R₃SiO_{3/2}) as a structural unit in excess of the aforementioned upper limit, it may become difficult to adjust the viscosity of the composition containing the co-modified silicone compound or raw materials thereof to the target range through process and quality control. Furthermore, when manufacturing the composition according to the present invention, the risk of thickening/gelling during the process increases, making it difficult to achieve stable industrial production.

The co-modified silicone compound according to the present invention is characterized in that terminal moieties of a polysiloxane main chain thereof include an M[R₃SiO_{1/2}] unit and M^{OR'}[R₂(OR')SiO_{1/2}] unit, and the molar ratio of M:M^{OR'} of the terminal groups is in the range from 1.7:0.3 to 1.2:0.8, and preferably 1.40:0.60 to 1.20:0.80. A structure in which the ratio of M units at the terminal portion exceeds the aforementioned upper limit is difficult to manufacture using a practical method. On the other hand, a structure in which the ratio of M^{OR'} units exceeds the aforementioned lower limit is unstable and may experience a decrease in transparency (i.e., opacification) or a significant increase in viscosity of the co-modified silicone composition according to the present invention during storage, potentially failing to achieve the intended technical effects of the present invention. Note that the molar ratio of M:M^{OR'} can be determined by ²⁹Si NMR analysis.

In the average structural formula above, when the total number of moles of M and M^{OR'} is set to 2.0, the total number of moles of carboxylate groups and acyloxy groups in a molecule must be 1.0 or less. This is because when the total number of moles of carboxylate groups and acyloxy groups exceeds 1.0, the co-modified silicone or composition thereof having amino/amide/two-type polyether-modified groups tends to become unstable, potentially leading to opacification or a significant increase in viscosity during storage. Note that the total number of moles of carboxylate groups and acyloxy groups can be determined by ¹³C NMR analysis.

The composition containing the co-modified silicone of the present invention preferably contains the co-modified silicone in high purity, and preferably contains a certain amount or less of the raw material polyether compound having a hydrosilylation-reactive terminal. Specifically, with respect to the polyether compound expressed by the following average structural formula:

Z-O-(C₂H₄O)_{d}(C₃H₆O)ₑ-R⁷ (2)

[where Z is a group selected from alkenyl groups with 2 to 8 carbon atoms or a hydrogen atom, and R⁷, d, and e are defined as described above],
when the sum of the abovementioned co-modified silicone compound and the polyether compound is 100 parts by mass, the composition preferably contains 5 parts by mass or less of the raw material polyether compound having a hydrosilylation-reactive terminal, more preferably 3 parts by mass or less, and particularly preferably 1 part by mass or less.
If the amount of the polyether compound exceeds the aforementioned upper limit, separation from the co-modified silicone composition of the present invention or resulting turbidity may occur, requiring careful product management.

Similarly, a composition containing the co-modified silicone according to the present invention preferably contains a certain amount or less of the raw material polyether compound having a hydrosilylation-reactive terminal. Specifically, with respect to the polyether compound expressed by the following average structural formula:

Z-O-(C₂H₄O)_{f}(C₃H₆O)_{g}-R⁷ (2')

[where Z is a group selected from alkenyl groups with 2 to 8 carbon atoms or a hydrogen atom, and R⁷, f, and g are defined as described above],
when the sum of the abovementioned co-modified silicone and the polyether compound is 100 parts by mass, the composition preferably contains 5 parts by mass or less of the raw material polyether compound having a hydrosilylation-reactive terminal, more preferably 3 parts by mass or less, and particularly preferably 1 part by mass or less.

Particularly preferably, when the sum of the aforementioned co-modified silicone and the two types of polyether compounds expressed by the average structural formula (2) or (2') is 100 parts by mass, the composition preferably contains 5 parts by mass or less of raw materials from the two types of polyether compounds having hydrosilylation-reactive terminals, more preferably 3 parts by mass or less, and most preferably 1 part by mass or less.

When the co-modified silicone according to the present invention and composition containing the same are incorporated as raw materials for a transparent concentrated liquid cleaning agent for laundering or a transparent liquid cleaning agent, the ratio of moles of oxyethylene (C₂H₄O) groups to one mole of Si -R groups in the composition is preferably in the range from 0.2 to 0.6, and particularly preferably in the range from 0.35 to 0.45. If the molar ratio of oxyethylene groups to Si-R groups is below the aforementioned lower limit, the formulation stability may decrease. On the other hand, if the ratio exceeds the aforementioned upper limit, while the formulation stability may be excellent, effects such as flexibility, fiber lubrication, and texture may decrease. Note that the ratio can be determined by ¹³C NMR analysis.

When the co-modified silicone according to the present invention and the composition containing the same are incorporated as raw materials for a transparent concentrated liquid cleaning agent for laundering or a transparent liquid cleaning agent, the amount of aminoalkyl groups (-NH₂%) in the composition is preferably in the range from 0.10 to 0.60 mass%, and particularly preferably in the range from 0.20 to 0.50 mass%. Note that the mass percentage of aminoalkyl groups can be calculated by neutralization titration.

If the mass percentage of the aminoalkyl groups is below the aforementioned lower limit, the viscosity of the composition tends to increase, which may be disadvantageous in terms of handling properties and solubility in a transparent liquid cleaning agent. Herein, when incorporating silicones containing amino groups into a transparent liquid cleaning agent, it is generally considered effective to neutralize the silicones with a pH adjuster or the like to improve the solubility thereof into the system or the formulation stability thereof.

When the mass percentage of the aminoalkyl groups exceeds the aforementioned upper limit, the hydrophilic effect due to neutralization increases, resulting in improved solubility and stability in liquid cleaning agent formulations that do not contain anionic surfactants. However, in the case of liquid cleaning agent formulations containing anionic surfactants, the greater the mass percentage of amino groups in the silicone, the lower the formulation stability in the cleaning agent becomes, which can easily lead to decreased transparency and separation. There are also concerns about adverse effects on cleaning power. Furthermore, transparent liquid cleaning agent containing more of the aminoalkyl groups than the aforementioned upper limit may be more prone to discoloration during storage under unfavorable environments such as high temperatures in summer. Repeated laundering using such cleaning agent may result in quality defects such as gradual discoloration of a laundry material itself.

The co-modified silicone and the composition containing the same according to the present invention may contain tetramers, pentamers, or hexamers of a cyclic dimethylsiloxane as impurities, but the amount is preferably reduced to 0.1 mass% or less of each in the total composition, more preferably 0.01 mass% or less, and particularly preferable below the detection limit by conventional methods. Note that the co-modified silicone in which the amount of cyclic dimethylsiloxane in the form of tetra- to hexamers is reduced, and the composition containing the same, can be easily manufactured by a method to be described later.

### Technical Significance of the Present Invention

As described above, the co-modified silicone and composition thereof according to the present invention include technical elements that partially overlap with the definitions of the amino-modified silicone derivative disclosed as general formula (I) in Patent Document 3 and the amino-modified silicone disclosed as general formula (II) in Patent Document 6. However, these documents do not mention any co-modified silicone having two additional different polyether groups in one molecule in addition to an amino group and an amide polyether group, nor do they describe or suggest any technical benefits thereof. Furthermore, the "amide polyether group-containing silicones having a structure in which both terminals of a polysiloxane main chain are blocked with trimethylsilyl groups" disclosed in these documents are difficult to manufacture by practical means because production methods thereof are not specifically disclosed. Similarly, Patent Document 7 (Reference Example 1) reports that when a mixture of an amino group and a polyether group-containing organopolysiloxane and polyoxyethylene (4,5) lauryl ether acetate was reacted at 130°C for two hours, the resulting reaction mixture was an "amide polyether group-containing organopolysiloxane having a structure in which both terminals of a polysiloxane main chain are blocked with trimethylsilyl groups". However, when the present inventors conducted a follow-up experiment under similar conditions, they found that the specified structure could not be obtained under the abovementioned manufacturing conditions. Furthermore, the actual product had several unreported and complex problems, including: (i) being obtainable only as low-purity compositions; (ii) having a high cyclic dimethylsiloxane amount; (iii) having unstable properties or composition appearance and becoming non-transparent during storage despite being a transparent liquid immediately after manufacturing; and (iv) experiencing a significant increase in composition viscosity during storage.

On the other hand, the co-modified silicone and composition thereof according to the present invention, having the aforementioned structural structure as a co-modified silicone, maintains a transparent appearance over a long period of time, unlike similar compounds disclosed in the prior art, and significantly suppresses viscosity increase during storage compared to amide polyether group-containing silicone compositions obtained by previously reported manufacturing methods. Furthermore, the co-modified silicone and composition thereof according to the present invention can maintain a low viscosity even after removing cyclic dimethylsiloxane by heating under reduced pressure, thus achieving both high purity, favorable handling properties, and production stability. Therefore, the co-modified silicone and composition thereof according to the present invention have particularly excellent properties from a commercial perspective as additives to a transparent liquid cleaning agent, and achieve a remarkably significant technical effect by fully solving the complex and intricate problems inherent in the prior art.

### Manufacturing of Co-modified Silicone and Composition Thereof

The co-modified silicone and composition thereof according to the present invention can be manufactured by reacting an amino/two-type polyether co-modified silicone expressed by the following average chemical structural formula:

MDₜD^{(AM)}ᵤD^{(PE1)}ᵥD^{(PE2)}_{z}M^{OR'}Tx (3)

with a polyether group-containing carboxylic acid expressed by the following average chemical structural formula:

   HOOC-(CH₂)_{b}-O(C₂H₄O)_{c}-R⁵ (4)
by heating and mixing at 80 to 180°C under reduced pressure and an inert gas flow, such that the molar ratio (reaction ratio) of the aminoalkyl group in the amino/polyether co-modified silicone expressed by formula (3) and the carboxyl group in the polyether group-containing carboxylic acid expressed by formula (4) satisfies the relationship 0.1 ≤ carboxyl group/aminoalkyl group ≤ 1.0.
The compounds expressed by formulas (3) and (4) will be further described below.

In formula (3), M represents R₃SiO_{1/2}, D represents R₂SiO, D^{(AM)} represents RR¹SiO, D^{(PE1)} represents an RR³SiO unit, D^{(PE2)} represents an RR⁸SiO unit, M^{OR'} represents R₂(OR')SiO_{1/2}, T represents a siloxy unit expressed by R₃SiO_{3/2}, each t, u, v, and z is a positive number, the relationship 50 ≤ t + u + v + z ≤ 160 is satisfied, and x is a number in the range from 0 to 1; the molar ratio M:M^{OR'} is in the range from 1.7:0.3 to 1.2:0.8;
R represent an alkyl group with 1 to 12 carbon atoms;
R¹ represents an aminoalkyl group with 1 to 12 carbon atoms;
R³ represents a group expressed by -R⁶-O-(C₂H₄O)_{d}(C₃H₆O)ₑ-R⁷ (where R⁶ represents an alkylene group with 2 to 8 carbon atoms, R⁷ represents an alkyl group with 1 to 12 carbon atoms, d is a number in the range from 3 to 25, e is a number in the range from 0 to 10, and if e is not 0, the relationship d/e ≥ 7/3 is satisfied);
R⁸ represents a group expressed by -R⁶-O-(C₂H₄O)_{f}(C₃H₆O)_{g}-R⁷ (where R⁶ and R⁷ are the same groups as above, f and g are numbers from 0 to 4, and the relationship 1 ≤ f + g ≤ 4 is satisfied); and
OR' is a group selected from hydroxyl groups, alkoxy group-containing groups, and acyloxy group-containing groups.

In formula (3), R preferably represents a methyl group, R¹ preferably represents an aminopropyl group but may represent a secondary aminoalkyl group, the oxyethylene and oxypropylene portions of R³ and R⁸ may be random addition structures or block addition structures, and R³ and R⁸ may be a mixture of a plurality of different polyether groups. Furthermore, R⁶ preferably represents a propylene group or a methylpropylene group, and R⁷ preferably represents a methyl group.

In equation (3), each t, u, and v are positive numbers, and the relationship 50 ≤ t + u + v ≤ 160 is preferably satisfied in order to provide a co-modified silicone expressed by the corresponding average structural formula. Similarly, the molar ratio M:M^{OR'} is preferably in the range from 1.7:0.3 to 1.2:0.8. A structure with a ratio of M units exceeding 1.7 is considered difficult to manufacture using a practically advantageous method. Note that the molar ratio of M:M^{OR'} can be determined by ²⁹Si NMR analysis.

The amino/two-type polyether co-modified silicone expressed by formula (3) preferably contains 0 to 1 mole of T units (siloxy units expressed as R₃SiO_{3/2}) as structural units, and when the total number of moles of M and M^{OR'} is 2.0, the amount (x) of T units is more preferably 0.7 moles or less (i.e., x is in the range from 0 to 0.7). If the amount per unit exceeds 0.7 moles, it becomes difficult to control the process and quality to adjust the viscosity of the raw material amino/two-type polyether co-modified silicone and the composition thereof to the target range, and the risk of abnormal thickening or gelation during the manufacturing process may increase.

In formula (4), R⁵ represents a monovalent hydrocarbon group with 1 to 18 carbon atoms, b is a number in the range from 1 to 6, and c is a number in the range from 2 to 20, and preferably in the range from 4 to 10.

In the manufacturing of the co-modified silicone and composition thereof according to the present invention, the polyether group-containing carboxylic acid expressed by formula (4) may be used as a raw material as is, but from the perspective of economic efficiency and productivity, an aqueous solution of a commercially readily available polyether group-containing carboxylic acid is preferably used as a raw material.

The molar ratio (reaction ratio) of the aminoalkyl group in the amino/two-type polyether co-modified silicone expressed by formula (3) and the carboxyl group in the polyether group-containing carboxylic acid expressed by formula (4) may vary depending on the relationship between the average chemical structures of the two. In the manufacturing method of the present invention, the relationship 0.1 ≤ carboxyl group/aminoalkyl group ≤ 1.0 must be satisfied, with the relationship 0.2 ≤ carboxyl group/aminoalkyl group ≤ 0.8 being preferably satisfied, and the relationship 0.3 ≤ carboxyl group/aminoalkyl group ≤ 0.6 being particularly preferably satisfied.

The temperature at which the aminoalkyl group in the amino/two-type polyether co-modified silicone expressed by formula (3) and the polyether group-containing carboxylic acid expressed by formula (4) are reacted by heating and mixing is preferably in the range from 90 to 150°C, and more preferably in the range from 100 to 130°C. If the reaction temperature is lower than 80°C, the amidation reaction may proceed extremely slowly and may not proceed at a practical rate. On the other hand, at higher temperatures, particularly above 180°C, side reactions tend to progress more rapidly, and caution may be required with regard to a decrease in the yield of the target compound and the like.

The manufacturing method according to the present invention is characterized in that the reaction between the aminoalkyl group in the amino/polyether co-modified silicone expressed by formula (3) and the polyether group-containing carboxylic acid expressed by formula (4) is performed under reduced pressure and an inert gas flow within the abovementioned molar ratio and reaction temperature range. The present inventors have newly discovered that by selecting such reaction conditions, water derived from raw materials or produced as a by-product in a condensation reaction, as well as cyclic dimethylsiloxane tetra- and hexamers, which are impurities, can be efficiently removed; the amidation reaction proceeds more efficiently than under ambient pressure; and the chemical structure and quality of a co-modified silicone having amino/amide/two different polyether-modified groups, which is a target product, can be stabilized. On the other hand, an operation may be optionally performed in which the amidation reaction is initially performed under ambient pressure and then switched midway to reduced pressure to reach a target reaction rate.

Note that Patent Documents 1, 5, and 7 do not describe or suggest any method for performing the reaction between an amino group-containing silicone and a polyether group-containing carboxylic acid under reduced pressure, nor do they describe or suggest any advantages thereof. Therefore, it is difficult to obtain the co-modified silicone and composition thereof according to the present invention by the manufacturing methods described in these documents.

The duration of the amidation reaction under reduced pressure depends on the reaction temperature, but for example, at 120 to 130°C, approximately 4 to 6 hours is required for the amidation rate to reach the target level. In industrial production, if the process initially includes an amidation step at ambient pressure, it may be possible to limit the amidation step under reduced pressure to less than four hours.

The degree of depressurization during the abovementioned amidation reaction under reduced pressure is variable because, due to foaming of a reaction mixture within a reaction device during depressurization, the pressure must be gradually reduced from ambient pressure to a vacuum while avoiding bumping. For example, a stepwise depressurization operation is preferably performed, such as: ambient pressure => 380 Torr => 250 Torr => 180 Torr => 120 Torr => 80 Torr => 50 Torr => 30 Torr => 15 Torr => 5 Torr => 1 Torr or less.

While argon gas or the like can be used as an inert gas when manufacturing the co-modified silicone and composition thereof according to the present invention, nitrogen gas is optimal from the perspective of economic efficiency. These inert gases can be introduced either by circulation through an upper space of a reaction container or by bubbling through a raw material liquid inside the reaction container. The latter is more advantageous as it allows for easier removal of impurities and water.

The abovementioned manufacturing method allows for the efficient manufacturing of the co-modified silicone and composition thereof according to the present invention, characterized in that the amount of each cyclic dimethylsiloxane tetra-, penta-, and hexamer is 0.1 mass% or less.

### [Filtration step]

When neutralized salts are included in intermediates (amino/two-type polyether co-modified silicone and compositions thereof) and reaction raw materials (polyether carboxylic acid and the like) used in the manufacturing of the co-modified silicone and composition thereof of the present invention, the salts can migrate to the final product, causing appearance turbidity and the formation of precipitates.
In such cases, filtration is necessary after the aforementioned amidation reaction. Filtration may be performed using an arbitrary filter or the like depending on the appearance of turbidity and the type and size of the precipitate, and a plurality of filtrations may be performed. This makes it possible to obtain the co-modified silicone and composition thereof according to the present invention, which are of high purity and have excellent quality stability, even when using low-cost intermediates and raw materials.

### Manufacturing of Intermediate (Amino/Two-Type Polyether Co-Modified Silicone Composition)

The method for manufacturing an intermediate composition containing the amino/two-type polyether co-modified silicone expressed by formula (3) above is not particularly limited, but an industrially advantageous method is preferred. For example, one method involves charging a calculated amount of dimethylpolysiloxane having a polyether group, a hydrolysis condensate of aminoalkyldialkoxymethylsilane, and, if necessary, cyclic dimethylsiloxane, dimethylpolysiloxane, or the like into a reactor, and performing an equilibration reaction in the presence of an alkali catalyst. The conditions for the equilibration reaction are preferably similar to those used for the manufacturing of general amino-modified silicones.

Examples of suitable alkaline catalysts include potassium hydroxide or aqueous solutions thereof, and an aqueous solution or methanol solution of tetramethylammonium hydroxide, potassium silanolate, and tetramethylammonium silanolate. When using potassium hydroxide or potassium silanolate, the catalyst is preferably neutralized by adding acetic acid or the like after the equilibration reaction. When using tetramethylammonium hydroxide or tetramethylammonium silanolate, thermal decomposition treatment is preferable. Subsequently, low-boiling point components present in the reaction system are preferably removed or reduced by a stripping treatment. Furthermore, filtration may be optionally performed.

Note that in order to manufacture a composition containing an amino/two-type polyether co-modified silicone expressed by formula (3) above, and further containing a T unit (siloxy unit expressed as R₃SiO_{3/2}), an appropriate amount of a polysiloxane compound or alkoxysilane compound having a T unit may be used as one of the raw materials. In addition, for example, if an appropriate amount of aminoalkyltrialkoxysilane is used intentionally or is present as an impurity of the original raw materials for the hydrolysis condensate of aminoalkyldialkoxymethylsilane, then when an equilibration reaction is performed to obtain the amino/two-type polyether co-modified silicone expressed by formula (3), a prescribed amount of T units can be generated in the molecule. Another pathway for T unit generation occurs when a dimethylpolysiloxane having two different polyether groups contains a small amount of a -SiMe(OR")- structural unit [where OR" represents a group selected from hydroxyl groups, alkoxy group-containing groups, and acyloxy group-containing groups]. Dimethylpolysiloxane having two different polyether groups is generally manufactured by a hydrosilylation reaction of an Si-H group-containing dimethylpolysiloxane and two different polyethers having vinyl groups at the terminals in the presence of a platinum catalyst. However, due to the influence of water present in the reaction system and the alcohol solvent of the platinum catalyst, a slight dehydrogenation reaction may occur, and the aforementioned -SiMe(OR")- structural unit may be generated. When an equilibration reaction is performed using such raw materials to obtain the amino/two-type polyether-modified silicone composition of formula (3), a small amount of T units is generated.

### Manufacturing of Raw Materials (Polyether Group-Containing Carboxylic Acid)

The method for manufacturing the polyether group-containing carboxylic acid expressed by formula (4) above is not particularly limited. For example, when manufacturing a polyether group-containing carboxylic acid expressed by the following average chemical structural formula:

HOOC-CH₂-O(C₂H₄O)_{c}-C₁₂H₂₅ (5)

the following method can be used: reacting a polyoxyethylene lauryl ether expressed by the average chemical structural formula:HO(C₂H₄O)_{c}-C₁₂H₂₅ (6)
with monochloroacetic acid expressed by the average chemical structural formula HOOC-CH₂-Cl (7)
in the presence of an alkali metal hydroxide such as sodium hydroxide or potassium hydroxide to perform etherification.
At this time, a salt such as NaCl or KCl is produced as a by-product. Therefore, the polyether group-containing carboxylic acid of formula (5) above is often obtained in solution form containing water and a salt with a main component concentration of 90 to 96 mass%, and is also commercially available in this form. In the manufacturing method according to the present invention, a raw material in such solution form can also be used.

As other impurities in the polyether group-containing carboxylic acid of formula (5) above, for example, a compound expressed by the following average chemical structural formula:

HOOC-CH₂-O-C₁₂H₂₅

can be considered.
This compound is generated when a small amount of lauryl alcohol, an original raw material that remains from formula (6), reacts according to formula (7).

Furthermore, as other impurities in the polyether group-containing carboxylic acid of formula (5) above, a diglycolic acid expressed by the following average chemical structural formula:

HOOC-CH₂-O-CH₂-COOH

can be considered.
This compound is generated when the monochloroacetic acid of formula (7) is hydrolyzed in the presence of an alkali metal hydroxide to form glycolic acid, which is then further reacted by etherification by another monochloroacetic acid molecule.

By selecting the manufacturing method of the present invention, even when using a polyether group-containing carboxylic acid containing the impurities described above as a raw material, a highly pure and quality-stable co-modified silicone and composition according to the present invention can be obtained.

### Manufacturing of Starting Material (Dimethylpolysiloxane Having Two Types of Polyether Groups)

The two-type polyether-modified silicone and composition thereof, the co-modified silicone being one of the starting materials used in the manufacturing of the amino/two-type polyether co-modified silicone expressed by formula (3) and a composition containing the same (intermediate), can be designed to correspond to the target structure of the final products, which are the co-modified silicone and composition according to the present invention, and are preferably manufactured in an industrially advantageous manner. As a general example, a simple description will be provided of the general manufacturing method for a polyether-modified silicone and composition thereof, expressed by the following average chemical structural formula:

MDₘD^{(PE1)}ₙD^{(PE2)}ⱼM (10)

[where M represents a (CH₃)₃SiO_{1/2} unit, D represents a (CH₃)₂SiO unit, D^{(PE1)} represents an RR³SiO unit, D^{(PE2)} represents an RR⁸SiO unit, m is 0 or a positive number, n and j are positive numbers, R³ represents a group expressed by -R⁶-O-(C₂H₄O)_{d}(C₃H₆O)ₑ-R⁷, R⁶ represents an alkylene group with 2 to 8 carbon atoms, R⁷ represents an alkyl group with 1 to 12 carbon atoms, R⁸ represents a group expressed by -R⁶-O-(C₂H₄O)_{f}(C₃H₆O)_{g}-R⁷, d is a number from 3 to 25, e is a number from 0 to 25, f and g are each a number from 0 to 4 and satisfy the relationship 1 ≤ f + g ≤ 4, and the molar ratio d/e ≥ 7/3 is satisfied. The oxyethylene portion and oxypropylene portion in R³ may have either a random addition structure or a block addition structure. R³ and R⁸ may be mixtures of a plurality of different polyether groups].

The polyether-modified silicone expressed by the formula (10) above and a composition thereof can be manufactured by subjecting:
an Si-H group-containing dimethylpolysiloxane expressed by the following average chemical structural formula:

   MDₘD^{H}₍ₙ₊ⱼ₎M (11)
[where M, D, m, n, and j have the same meanings as defined above, and D^{H} represents an H(CH₃)SiO unit],
to a hydrosilylation reaction with
a first vinyl terminal group-containing polyether, preferably expressed by the following average chemical structural formula:

   H₂C=CH(R⁸)-(CH₂)ₖ-O(C₂H₄O)_{d}(C₃H₆O)ₑ-R⁷ (12)
[where R⁸ represents a hydrogen atom or a methyl group, R⁷ represents an alkyl group having 1 to 12 carbon atoms, k is a number from 0 to 6, d is a number from 3 to 25, e is a number from 0 to 25, the molar ratio d/e ≥ 7/3 is satisfied, and the oxyethylene portion and oxypropylene portion may have either a random addition structure or a block addition structure],
   and
a second vinyl terminal group-containing polyether, preferably expressed by the following average chemical structural formula: H₂C=CH(R⁸)-(CH₂)ₖ-O(C₂H₄O)_{f}(C₃H₆O)_{g}-R⁷ (1k)
[where R⁸, R⁷, and k have the same meanings as defined above, f and g are each a number from 0 to 4 and satisfy the relationship 1 ≤ f + g ≤ 4, the oxyethylene portion and oxypropylene portion may have either a random addition structure or a block addition structure, and R³ may be a mixture of a plurality of different polyether groups],
in the presence of a platinum catalyst under known conditions, and then, particularly preferably, removing or reducing the unreacted second vinyl terminal group-containing polyether by a method such as stripping treatment under heating and reduced pressure.

During a hydrosilylation reaction, it is known that isomerization of the vinyl terminal group (hydrosilylation inactivation due to internal rearrangement of the double bond) occurs in a portion of formulas (12) and (1k). In order to completely consume the Si-H groups, the first polyether of formula (12) is used in excess with respect to the Si-H groups to be reacted, such that the molar ratio of H₂C=CH/Si-H is approximately 1.1 to 1.4, and the second polyether of formula (1k) can be used in excess with respect to the remaining Si-H groups, in a molar ratio such that H₂C=CH/Si-H is approximately 1.3 to 2.0. The second polyether can be removed by stripping after the reaction, and thus the dosage can be increased further. Therefore, a corresponding amount of unreacted polyether, mainly derived from the first polyether, is typically included in the two-type polyether-modified silicone composition expressed by formula (10).

Furthermore, the polyether of formula (12) often contains, as impurities in small amounts, a hydroxyl terminal group-containing polyether expressed by the following average chemical structural formula:

H₂C=CH(R⁸)-(CH₂)ₖ-O(C₂H₄O)_{d}(C₃H₆O)ₑ-H (13)

[where R⁸, k, d, and e have the same meanings as defined above],
or a hydroxyl terminal group-containing polyether expressed by the following average chemical structural formula:

   HO(C₂H₄O)_{d}(C₃H₆O)ₑ-R⁷ (14)
[where R⁷, d, and e have the same meanings as defined above].
Therefore, these can also be included in the two-type polyether-modified silicone composition represented by the above formula (10).

In the manufacturing method of the present invention, the two-type polyether-modified silicone expressed by formula (10) and compositions thereof may optionally be further subjected to hydrolysis treatment in the presence of an acidic inorganic salt by the method described in JP 5491152 B, hydrogenation treatment by the method described in JP H07-330907 A, and purification treatment by removal of low-boiling point substances, filtration, or the like. Furthermore, the polyether-modified silicone expressed by formula (10) and compositions thereof may have an antioxidant added and dissolved in the range from 10 to 1000 ppm by mass, with examples of antioxidants including vitamin E and BHT (2,6-di-t-butyl-p-cresol).

In the method for manufacturing the co-modified silicone and composition thereof as described above, intermediates, raw material compounds, and starting materials that exhibit little deterioration over time after manufacturing are preferable in order to suppress side reactions.

The liquid cleaning agent according to the present invention preferably contains:
(I) a cleaning organic nonionic surfactant having a polyoxyethylene group (with an average number of oxyethylene repetitions in the range from 3 to 16), in the range from 10 to 60 mass% of the total transparent liquid cleaning agent;
(II) at least one freezing inhibitor selected from (II-1) to (II-3) below, in the range from 2 to 20 mass% of the total transparent liquid cleaning agent
(II-1) saturated monohydric alcohols with 2 to 4 carbon atoms,
(II-2) glycol ethers monosubstituted with an alkyl group with 1 to 6 carbon atoms (provided that the glycol ether contains an oxyethylene group and/or an oxypropylene group, and the number of repetitions thereof is in the range from 1 to 3), and
(II-3) di- or triol compounds selected from propylene glycol, dipropylene glycol, tripropylene glycol, triethylene glycol, tetraethylene glycol, trimethylene glycol, and glycerin;
(III) water in the range of 20 to 85 mass% of the total liquid cleaning agent; and
(IV) the aforementioned co-modified silicone composition: in the range of 0.3 to 3 mass% of the total liquid cleaning agent.

The liquid cleaning agent may further contain (V) 0.1 to 15 mass% of a stabilizer selected from antibacterial agents (preservatives), hydrotropes, antioxidants, and water softeners (chelating agents) {provided that the total amount of components (I) to (V) is 100 mass%}. Similarly, the liquid cleaning agent may further contain: (VI) 0.1 to 5 mass% of at least one anti-grime redeposition agent (anti-redeposition agent or dispersant); (VII) 0.1 to 6 mass% of a pH adjuster; (VIII) 0.1 to 2 mass% of a formulation of at least one enzyme selected from proteases, lipases, amylases, cellulases, esterases, pectinases, and mannanases; (IX) 1 to 150 ppm of a colorant; and (X) 10 to 6000 ppm of at least one aesthetic quality improver selected from 5 to 6000 ppm of a fragrance {provided that the total amount of (I) to (VIII) is 100 mass%}.

### (I) Organic Nonionic Surfactant

Component (I) is a cleaning organic nonionic surfactant having a polyoxyethylene group (the average value of the number of repetitions of oxyethylene is in the range from 3 to 16). A plurality of types of surfactants corresponding to (I) may be used in combination. Component (I) is preferably selected from those having excellent supplyability. Representative examples thereof include alkyl polyethoxylate (AE) and fatty acid polyethoxylate methyl ether (FEM). However, polyoxyethylene/polyoxypropylene alkyl ether (AEP) can also be preferably used as an AE that also has foam inhibiting properties. Note that in general, the HLB range of approximately 12 to 14 is considered to be an indicator of favorable cleaning properties.

AE has the advantage of being hardly affected by water hardness or electrolytes and can be used in combination with all other surfactants. There are many varieties of AEs with different functional characteristics, such as permeability, emulsification/dispersibility, cleaning properties, and the like, which are determined by the combination of differences in the structure and carbon number distribution of an alkyl lipophilic group and differences in the chain length of the polyoxyethylene hydrophilic group. Therefore, there is an advantage in which the balance of these various functions can be finely adjusted to suit the design purpose of the liquid cleaning agent. Note that in general, alkyl groups capable of imparting favorable cleaning properties are those with 10 to 16 carbon atoms, and more preferably those with 11 to 15 carbon atoms. Of these, AEs having a linear primary alkyl group are highly crystalline and have a pronounced tendency to gel and thicken at high concentrations in an aqueous medium. Therefore, when incorporating these AEs into a transparent concentrated liquid cleaning agent, care must be taken not to use in excess, and measures must be taken to increase the amounts of a hydrotropic agent and antifreezing agent. When an AE having a linear primary alkyl group is incorporated into the transparent liquid cleaning agent composition of the present invention, the amount added is preferably in the range from 0 to 10 mass%, and particularly preferably in the range from 0 to 5 mass%. AEs having a branched alkyl group and AEs derived from a secondary (sec) alcohol tend to be less prone to gelling or thickening at high concentrations in an aqueous medium, and are therefore advantageous in this respect. However, in consideration of biodegradability, an AE derived from a linear secondary (sec) alcohol is considered to be more preferable, and is one of the most preferred components of component (I) constituting the transparent liquid cleaning agent composition according to the present invention. In the transparent liquid cleaning agent composition of the present invention, when an AE derived from a linear secondary (sec) alcohol is incorporated as the main nonionic surfactant, the added amount thereof is preferably in the range from 10 to 35 mass%, and is particularly preferably in the range from 15 to 30 mass%. However, when this is treated as an auxiliary surfactant component, the added amount thereof may be less than 10%. On the other hand, AEP has reduced cohesiveness even if AEP has a linear primary alkyl group, and therefore can be incorporated at a higher concentration than ordinary AE. The amount of AEP added in the transparent liquid cleaning agent composition of the present invention is preferably in the range from 0 to 30 mass%, and particularly preferably in the range from 10 to 20 mass%.

FEM can also control functional characteristics such as permeability, emulsification/dispersibility, cleaning properties, and the like by combining differences in the distribution of the number of carbon atoms in the fatty alkyl group with differences in the chain length of the polyoxyethylene hydrophilic group. In general, alkyl groups capable of imparting favorable cleaning properties are considered to be those with 10 to 16 carbon atoms, and more preferably those with 11 to 15 carbon atoms. Unlike AE and AEP, FEM does not have a hydroxyl group in a molecule, and therefore, a hydrogen bond interaction is suppressed. As a result, the composition has the characteristic in which gelation or thickening at a high concentration in an aqueous medium is extremely unlikely to occur. Therefore, FEM is one of the preferred components as component (I) constituting the transparent liquid cleaning agent composition according to the present invention. When FEM is incorporated as a main nonionic surfactant in the transparent liquid cleaning agent composition of the present invention, the added amount thereof is preferably in the range from 10 to 50 mass%, and particularly preferably in the range from 20 to 40 mass%. However, when FEM is treated as an auxiliary surfactant component, the added amount thereof may be less than 10%. Like AE and AEP, FEM has the advantage that the cleaning power thereof is less affected by water hardness. However, an ester group is provided in a molecule, and therefore, hydrolysis may occur depending on the pH, temperature, and other conditions after being added to a liquid cleaning agent, resulting in a gradual deterioration in performance and quality. When FEM is incorporated, the pH of the liquid cleaning agent is preferably controlled in the range from 6.0 to 8.0, and more preferably in the range from 6.5 to 7.5. Furthermore, it should be noted that when incorporating FEM into the formulation of a transparent liquid cleaning agent, there is a constraint that necessitates avoiding the inclusion of an esterase or lipase.

In the transparent concentrated liquid cleaning agent for home laundering of the present invention, the total amount of component (I) is preferably in the range from 10 to 60 mass% of the total transparent liquid cleaning agent. Note that while the preferred range for the amount of component (I) added, which is AE, FEM, or AEP, is as described above, when aiming for a high concentration as a transparent concentrated liquid cleaning agent, the total amount of component (I) may be incorporated in the range from 10 to 60 mass%, 20 to 60 mass%, or 30 to 60 mass%.

### (II) Freezing inhibitor

Component (II) is at least one freezing inhibitor selected from (II-1) to (II-3) below, and is incorporated into the transparent liquid cleaning agent composition of the present invention in an amount in the range from 2 to 20 mass%. A combination of a plurality of types thereof may be used. The added amount of (II) is preferably in the range from 4 to 15 mass%, and more preferably in the range from 6 to 10 mass%. If the added amount of (II) is less than 2%, the fluidity of the transparent liquid cleaning agent decreases, causing a problem in which the cleaning agent is more likely to freeze in the winter depending on the geographical environment. On the other hand, adding more than 20% is possible, but the amount of water in component (III) is relatively reduced, which reduces the balance between cost and effectiveness.

(II-1) is a saturated monohydric alcohol with 2 to 4 carbon atoms, and examples thereof include ethanol, denatured alcohol, 1-propanol, 2-propanol, 1-butanol, isobutyl alcohol, sec-butyl alcohol, tert-butyl alcohol, and arbitrary mixtures thereof. From the perspective of low odor, ethanol and low-odor denatured alcohol are preferred. From the perspective of foam inhibiting properties, 1-butanol may be slightly more advantageous.

(II-2) is a glycol ether monosubstituted with an alkyl group with 1 to 6 carbon atoms (provided that the glycol ether contains an oxyethylene group and/or an oxypropylene group, and the number of repetitions thereof is in the range from 1 to 3). (II-2) is preferably selected from those having excellent supplyability, and examples of such compounds include compounds in which 1 to 2 moles of propylene oxide was added to propylene glycol methyl ether, propylene glycol n-propyl ether, propylene glycol n-butyl ether, dipropylene glycol methyl ether, dipropylene glycol n-propyl ether, dipropylene glycol n-butyl ether, tripropylene glycol methyl ether, tripropylene glycol n-butyl ether, diethylene glycol methyl ether, diethylene glycol ethyl ether, diethylene glycol n-butyl ether, triethylene glycol methyl ether, triethylene glycol ethyl ether, triethylene glycol n-butyl ether, ethylene glycol n-hexyl ether, diethylene glycol n-hexyl ether, and diethylene glycol n-butyl ether. In general, a number of repetitions of two provides a favorable balance between safety and cost, and ease of use is facilitated. On the other hand, from the perspective of compatibility with another component, n-butyl ether and n-hexyl ethers, which have an alkyl substitution group with a large number of carbon atoms, are preferred. Therefore, from a comprehensive perspective, diethylene glycol n-butyl ether, diethylene glycol n-hexyl ether, and dipropylene glycol n-butyl ether are particularly preferred.

(II-3) is a di- or triol- compound selected from propylene glycol, dipropylene glycol, tripropylene glycol, triethylene glycol, tetraethylene glycol, trimethylene glycol, and glycerin. Of these, propylene glycol, dipropylene glycol, tripropylene glycol and trimethylene glycol are more preferred, and propylene glycol or dipropylene glycol is most preferred.

### (III) Water

Component (III) is water, which is incorporated in the range from 20 to 85 mass% of the transparent liquid cleaning agent composition of the present invention. (III) is not particularly limited so long as the water is clean, but ion exchanged water, sterilized water, distilled water, purified water, pure water, and the like are preferred, and tap water or well water may also be usable in some cases. If the added amount of (III) is less than 20 mass%, not only does the cost of the liquid cleaning agent increase, but stably incorporating the enzyme tends to be difficult. If the added amount of (III) exceeds 85 mass%, the amount of various essential components that can be included in effective amounts decreases, making it difficult for consumers to perceive the commercial appeal and making it difficult to design a practical transparent liquid cleaning agent product. Furthermore, a higher proportion of water in the cleaning agent increases the cost of transporting the water during cleaning agent delivery, leading to wasted logistics costs and other expenses.

### (IV) Co-Modified Silicone and Composition Thereof

Component (IV) is the co-modified silicone and composition according to the present invention as described above, and is usually incorporated in an amount in the range from 0.3 to 3 mass% of the total transparent liquid cleaning agent. Within this range, cost-effectiveness is excellent and dissolving is easy in a formulation of existing light, transparent liquid cleaning agent that primarily uses a nonionic surfactant as a cleaning component. If the amount is less than 0.3 mass%, it will be difficult to perceive effects such as softening, fiber lubrication, texture improvement, or fiber surface coating. When the amount exceeds 3 mass%, the formulation stability in the transparent liquid cleaning agent tends to decrease. Therefore, it may be necessary to increase the amount of component (II) to improve solubility, or to select a component (I) that has a compatibility effect and use said component in a formulation, which may worsen the economic efficiency. In particular, the co-modified silicone composition according to the present invention is of high purity, and therefore, if the amount added is within the aforementioned range, the co-modified silicone, which is a main agent, can be quantitatively efficiently added. Furthermore, in a transparent concentrated liquid cleaning agent, the composition has the advantage of having little impact on transparency and stability, thereby enhancing the commercial appeal of the transparent liquid cleaning agent.

### (V) Stabilizer

Component (V) is a stabilizer selected from antibacterial agents (preservatives), hydrotropic agents, antioxidants, and water softeners (chelating agents), and the added amount thereof is 0.1 to 15 mass% of the transparent liquid cleaning agent composition of the present invention {provided that the total amount of (I) to (V) is 100 mass%}.

The antibacterial agent (preservative) according to component (V) is not particularly limited so long as the antimicrobial agent can be incorporated in a laundering cleaning agent for home use. Examples thereof include phenoxyethanol, phenoxypropanol, diethylene glycol monophenyl ether, triethylene glycol monophenyl ether, saturated alkanediols with 4 to 8 carbon atoms, monoalkyl or alkenyl ethers of glycerin, borates, benzoic acid, parabens, sodium benzoate, sodium dehydroacetate, formic acid, glutaraldehyde, benzyl alcohols, isopropylmethylphenol, diclosan, triclosan, chlorophene, parachlorometaxylenol, chlorthymol, carvacrol, dichlorophene, hexachlorophene, chlorocresol, methylisothiazolinone/methylchloroisothiazolinone combination, isothiazolinone/benzisothiazolinone combination, 5-chloro-2-methyl-4-isothiazolin-3-one, 1,2 benzothiazolone, and 2-(4-methylanomethylthio)benzimidazole. Of these, many of phenoxyethanol, phenoxypropanol, diethylene glycol monophenyl ether, triethylene glycol monophenyl ether, saturated alkanediols with 4 to 8 carbon atoms, and monoalkyl or alkenyl ethers of glycerin are liquid at room temperature and are relatively inexpensive among preservatives and antibacterial agents, and thus the added amount can be increased to 10 mass%. Other preservatives are highly effective and many are expensive, and thus are preferably added usually in the range of 0.1 to 2 mass%.

Examples of hydrotropic agents according to component (V) include toluenesulfonic acids, xylenesulfonic acids, and cumenesulfonic acids, and sodium or potassium salts thereof. In the present invention, the amount of hydrotrope added is preferably in the range of 0 to 4 mass%, and more preferably 0 to 2 mass%.

The antioxidant according to component (V) is preferably incorporated at an amount usually in the range from 0.01 to 1 mass%, and is selected from those that have little effect on the design color of the liquid cleaning agent. A plurality of types of antioxidants may be used in combination. Examples include sodium sulfite, sodium hydrogen sulfite, phenol-based antioxidants, and the like. Examples of phenol-based antioxidants include dibutylhydroxytoluene, butylhydroxyanisole, 2,2'-methylenebis(4-methyl-6-t-butylphenol), distyrenated cresol, dl-α-tocopherol, d-δ-tocopherol, and natural vitamin E, with dibutylhydroxytoluene being particularly preferred.

The water softener (chelating agent) according to component (V) is not particularly limited so long as incorporation in a laundering cleaning agent for home use is possible. However, the water softener is preferably incorporated at an amount in the range from 0.1 to 3 mass%, and a plurality of types may be used in combination. Note that in geographical environments where the water used for laundering is hard, the amount of the chelating agent added to the transparent liquid cleaning agent may be increased to about 5 mass%. Specific examples thereof include malonic acid, succinic acid, malic acid, diglycolic acid, tartaric acid, citric acid, and other polycarboxylic acids and salts thereof. It is possible to use ethylenediaminetetraacetic acid (salt), diethylenetriaminepentaacetic acid (salt), methylglycine diacetic acid (salt), ethylglycine diacetic acid (salt), nitrilotriacetic acid (salt), iminodisuccinic acid (salt), iminodiacetic acid (salt), tetrasodium aspartic acid-N,N-diacetate, trisodium serine diacetate; tetrasodium glutamic acid diacetate, and the like. Furthermore, the following can also be used: 1-hydroxyethane-1,1-diphosphonic acid, aminotri(methylenephosphonic acid), ethylenediaminetetra(methylenephosphonic acid), diethylenetriaminepenta(methylenephosphonic acid), and 2-phosphono-1,2,4-butanetricarboxylic acid, as well as sodium, potassium, ammonium and alkanolamine salts thereof. Citric acid, malic acid, trisodium methylglycine diacetate and 1-hydroxyethane-1,1-diphosphonate are preferred.

### (VI) Anti-Grime Redeposition Agent

The added amount of the anti-grime redeposition agent (anti-redeposition agent or dispersant) according to component (VI) is preferably in the range from 0.1 to 5 mass%, and has the functions of adsorbing to fibers and grime components to increase the electrical repulsive force therebetween, stably dispersing grime components in the cleaning solution to prevent redeposition to fibers, and the like. In general, polymers such as polyalkylene glycols, polyacrylic acids, celluloses, polyvinylpyrrolidones, ethoxylated polyethyleneimines, and the like are often used, and a combination of a plurality of types thereof may be used. Specific examples include polyacrylic acid, polymaleic acid, acrylic acid/maleic acid copolymer, carboxymethylcellulose, polyvinylpyrrolidone, polyethylene glycol, polypropylene glycol, propylene oxide adducts to polyhydric alcohols, ethoxylated polyethyleneimine, and propoxylated polyethyleneimine.

### (VII) pH Adjuster

Component (VII) is a pH adjuster, and the added amount of component (VII) varies depending on the target pH value of the transparent liquid cleaning agent, but it is usually used in the range from 0.1 to 6 mass%, and preferably in the range from 0.5 to 3 mass%. Examples of component (VII) include sulfuric acid, hydrochloric acid, lactic acid, glycolic acid, glutamic acid, aspartic acid, sulfamic acid, and other acidic compounds, monoethanolamine, diethanolamine, triethanolamine, methylethanolamine, and other alkanolamines, and sodium hydroxide, potassium hydroxide, sodium carbonate, potassium carbonate, and other alkaline compounds. Two or more types of pH adjusters may be used in combination. From the perspective of the long-term stability of the liquid cleaning agent, sulfuric acid, sodium hydroxide, potassium hydroxide, and alkanolamines are preferred, and of these, monoethanolamine is particularly preferred for likely having the effect of preventing deformation and deterioration of a material being cleaned, and preventing discoloration.

### (VIII) Enzyme

Component (VIII) is a formulation of at least one enzyme selected from proteases, lipases, amylases, cellulases, esterases, pectinases, and mannanases, and is preferably incorporated at an amount usually in the range of 0.1 to 2 mass%. Note that when component (VIII) is incorporated into the transparent liquid cleaning agent composition, the techniques introduced or cited in JP 5436199 B (JP 2011-137074 A), JP 6188239 B (JP 2016-017133 A), and JP 6732424 B (JP 2017-071664 A) may be utilized to suppress reductions in enzyme activity.

### Aesthetic Quality Improver: (IX) Colorant and (X) Fragrance

Furthermore, this liquid cleaning agent may contain an aesthetic quality improver from the perspective of usability and the appearance/fragrance of the formulation. Specifically, component (IX) is a colorant in an amount of 1 to 150 ppm, and component (X) is a fragrance in an amount of 5 to 6000 ppm. At least one aesthetic quality improver selected from (IX) and (X) is preferably incorporated in an amount of 10 to 6000 ppm {provided that the total amount of (I) to (VIII) is 100 mass%}. Note that representative examples of fragrance formulations are disclosed in JP 2002-146399 A, JP 2021-134324 A, and the like. Note that components (IX) and (X) may be omitted depending on the desired formulation, appearance, and fragrance of the liquid cleaning agent.

### Addition of Each Component

A liquid cleaning agent according to the present invention (particularly a transparent liquid cleaning agent) containing the aforementioned components (I) to (IV) and optionally components (V) to (X) can be manufactured by dissolving components (I) to (VII) by heating and mixing at 40 to 80°C, then cooling to 30°C or lower, and then adding one or more type of component selected from components (VIII), (IX), and (X) and mixing to form a homogenized mixture. Note that, depending on the target formulation of the liquid cleaning agent, some or all of the components (V) to (X) may be omitted during the manufacturing process described above.

The liquid cleaning agent according to the present invention (in particular, including a transparent concentrated liquid cleaning agent for laundering or a transparent liquid cleaning agent) may optionally contain another optional component that is suitable for use in a transparent liquid cleaning agent for home laundering and does not fall under components (I) to (X) above, to the extent that said optional component does not impair the technical effects of the present invention.

Examples of other optional components include organic surfactants other than component (I), oils other than component (IV) that are known to be used in liquid cleaning agents for home use, softeners or texture-improving agent components (e.g., organic oil agents, polyether-modified silicones and amide polyether group-containing silicones obtained by previously reported manufacturing methods, and organic cationic polymers for the purpose of providing firmness or resilience or reducing wrinkles), drugs for stabilizing enzymes, fluorescent whitening agents, appropriate amounts of inorganic salts, polyethylene glycol phenyl ether cleaning power enhancers, fatty acids (salts), and antifoaming agents. Note that antifoaming agent that can be used in the liquid cleaning agent according to the present invention explicitly includes a component disclosed by the present inventors in JP 2023-47481 and the priority application based thereon.

Organic surfactants other than component (I) are preferably selected and added in appropriate amounts, taking into consideration the basic formulation framework of a light, transparent liquid cleaning agent (balanced products of types that provide moderate cleaning power as well as softening and texture-improving effects on materials to be cleaned, such as clothing) developed by each cleaning agent manufacturer. Examples of such surfactants include anionic surfactants, amphoteric surfactants, cationic surfactants, and weak cationic surfactants. These are not essential components in the present invention, and therefore, the amount thereof in the transparent liquid cleaning agent is preferably 5 mass% or less, or 10 mass% or less if the effects thereof are to be emphasized.

### Addition of Ionic Surfactant

In order to design a formulation in which a light, transparent liquid cleaning agent containing the co-modified silicone and composition thereof according to the present invention can be used without adversely affecting almost all clothing materials such as wool, silk, cotton, linen, and synthetic fibers, it is considered efficient and convenient to use a plurality of types of specific organic nonionic surfactants as cleaning surfactants and exclude ionic surfactants, as reported in Patent Documents 3 and 6. On the other hand, this does not prevent cleaning agent manufacturers from arbitrarily using small amounts of ionic surfactants in combination for their own convenience or the like. In this case, it is considered preferable to design the liquid cleaning agent to have a neutral pH of around 7.0 to avoid damaging wool or silk, and to include lipase or esterase as an enzyme.

When the co-modified silicone of the present invention and compositions thereof are used in light, transparent liquid cleaning agents primarily for clothing and other materials made of relatively strong and durable synthetic fibers such as cotton or polyester, the cleaning power can be enhanced by adding an appropriate amount of a specific anionic surfactant, as described in Patent Documents 8, 10, and 11, in addition to component (I). With this design philosophy, protease is preferably further incorporated as an enzyme from the aforementioned component (VIII), as this can enhance the cleaning properties against protein grime. In this case, from the perspective of maintaining enzyme function, the liquid cleaning agent is preferably designed such that the pH thereof is neutral at around 7.0.

If it is desired to add texture, softening effect, static electricity suppression, or antibacterial effect to a transparent liquid cleaning agent containing the co-modified silicone and composition thereof of the present invention using a cationic surfactant, an appropriate amount of a specific quaternary ammonium salt described in Patent Document 8, Patent Document 9, WO1994/06899, or the like, may be added. Of these, ester quaternary salts with excellent biodegradability are preferred, and examples thereof include triethanolamine quaternary salt (TEAQ), diethyloxyethyldimethylammonium chloride (DEEDMAC), (Z)-2-hydroxy-3-[(1-oxo-9-octadecenyl)oxy]propyltrimethylammonium chloride (HEQ), bis[2-(stearoyloxy)ethyl]dimethylammonium chloride, bis[2(-hexadecanoyloxy)ethyl]dimethylammonium chloride, and dimethyl sulfate quaternized products of a reaction between octadecenoic acid and triethanolamine. Furthermore, amide-type alkylammonium salts such as stearamidopropyldimethyl-β-hydroxyethylammonium salts may also be used. When using quaternary ester salts, the liquid cleaning agent is preferably designed such that the pH thereof is neutral at around 7.0.

### Uses, Advantages, and Other Applications of Co-Modified Silicone and Composition Thereof According to the Present Invention in Transparent Liquid Cleaning Agent

As described above, the co-modified silicone and composition thereof according to the present invention can be used by being incorporated into concentrated transparent liquid cleaning agents for laundering or transparent liquid cleaning agents. The aforementioned composition, when incorporated into a transparent liquid cleaning agent, does not impede or only slightly impedes the transparent appearance of the cleaning agent, and can be used as a softener component, fiber lubricant component, texture-improving component, or fiber surface coating component. Furthermore, the composition has low viscosity and does not undergo thickening or changes in appearance during storage, or if thickening or changes in appearance do occur, the degree is small, so that when manufacturing a liquid cleaning agent quality control is easy and highly practical, and handling properties are excellent. The amount of impurities is low, and therefore, it is possible to increase the added amount of the composition added to a transparent liquid cleaning agent, which has the advantage of enhancing the effectiveness of the transparent liquid cleaning agent.

Note that the co-modified silicone and composition thereof according to the present invention may be used for purposes other than a liquid cleaning agent, being used, for example, in the field of fiber treatment agents as described in Patent Document 1, in the field of treatment agents for wiping paper as described in Patent Document 7, in the field of personal care products such as hair cleaning agents and hair treatment agents, and in the field of softeners for clothing. Furthermore, use is also possible by adding to a non-transparent liquid cleaning agent or solid cleaning agent, and there are no particular limitations therefor.

### EXAMPLES

Hereinafter, the present invention will be further described in detail on the basis of Examples and Comparative Examples, but the present invention is not limited thereto. In addition, "%" in the test examples refers to mass%, unless otherwise specified. In the following reference examples, comparative examples, and working examples, for the sake of simplicity, the following abbreviations shall have the following meanings: M represents a (CH₃)₃SiO_{1/2} unit; D represents a (CH₃)₂SiO unit; D^{H} represents an H(CH₃)SiO unit; T represents a CH₃SiO_{3/2} unit; D^{(AM)} represents a (CH₃)(C₃H₆NH₂)SiO unit; D^{(AMD)} represents a (CH₃){C₃H₆NHCO-CH₂O(EO)_{4.5}-C₁₂H₂₅}SiO unit; D^{(PE1)} represents a (CH₃){C₃H₆O(EO)₁₁-CH₃}SiO unit; D^{(PE2)} represents a (CH₃){C₃H₆O(EO)₃-CH₃}SiO unit; EO represents a CH₂CH₂O unit; PO represents a C₃H₆O unit (mainly CH₂(CH₃)CHO unit); Me represents a CH₃ group; IPA represents 2-propanol;
CPA represents chloroplatinic acid H₂[PtCl₆]·(H₂O)₆; D₄ represents octamethylcyclotetrasiloxane; and POE(4.5) represents polyoxyethylene (average 4.5 moles of oxyethylene groups added). Furthermore, the average chemical structural formula of each compound was identified by NMR analysis using ²⁹Si, ¹³C, and the like as nuclides. The viscosity (mPa·s) of each composition was measured at 25°C using a rotational viscometer.

### Reference Example 1 Preparation of Two-Type Polyether-Modified Silicone Composition (Original Raw Material)

134.1 g of Si-H group-containing dimethylpolysiloxane expressed by the design average chemical structural formula: MD_{51.3}D^{H}_{6.3}M and 103.1 g of a first allyl-terminated polyether expressed by the design average chemical structural formula: H₂C=CH-CH₂-O(EO)₁₁-Me were charged into a 500 mL reactor, and heating was started while stirring under a nitrogen gas flow. When 0.33 mL of an IPA solution of a 1,3-divinyl-1,1,3,3-tetramethyldisiloxane platinum complex (Pt concentration: 0.75 mass%) was added to the mixture and aged at 40 to 82°C for 1.5 to 2.5 hours, the reaction rate reached a target. Next, 14.8 g of a second allyl-terminated polyether, represented by the design average chemical structural formula: H₂C=CH-CH₂-O(EO)₃-Me, and 0.33 to 0.88 mL of the platinum catalyst solution were added, and the mixture was aged at approximately 80°C for 3 to 3.5 hours until the reaction was complete. The pressure of the system was reduced, and a stripping process was performed for 1.5 to 5 hours under conditions of 130 to 138°C and 1 to 10 Torr. After cooling to 55°C or lower and restoring the pressure, the mixture was filtered using a depth filter to obtain 217 g of a two-type polyether-modified silicone composition expressed by the average chemical structural formula: MD_{51.3}D^{(PE1)}_{5.2}D^{(PE2)}_{1.1}M{^{(PE1)}=-C₃H₆O(EO)₁₁-Me, ^{(PE2)}=-C₃H₆O(EO)₃-Me} as a nearly colorless transparent liquid. The H₂C=CH/Si-H molar ratio during the hydrosilylation reaction was 1.15 for the first polyether, and thus the excess amount of polyether in the two-type polyether-modified silicone composition was calculated to be 5.5 mass%.

### Reference Example 2 Preparation of Two-Type Polyether-Modified Silicone Composition (Original Raw Material)

When the same experiment as in Reference Example 1 was performed at a later date, the reactivity of the first polyether was slightly reduced, but this did not pose a problem, and 216 g of a two-type polyether-modified silicone composition expressed by the average chemical structural formula MD_{51.3}D^{(PE1)}_{5.0}D^{(PE2)}_{1.3}M{^{(PE1)}=-C₃H₆O(EO)₁₁-Me, ^{(PE2)}=-C₃H₆O(EO)₃-Me} was obtained as a light brown transparent liquid. By working backward from the reaction rate of the first polyether, it was found that the H₂C=CH/Si-H molar ratio during the first hydrosilylation reaction was 1.20 for the first polyether. In light thereof, the excess amount of polyether in the two-type polyether-modified silicone composition was calculated to be 6.9 mass%.

### Reference Example 3 Preparation of Single Polyether-Modified Silicone Composition

253.53 g of Si-H group-containing dimethylpolysiloxane expressed by the design average chemical structural formula: MD_{72.8}D^{H}_{4.8}M and 146.48 g of an allyl-terminated polyether expressed by the design average chemical structural formula: H₂C=CH-CH₂-O(EO)₁₁-Me were charged into a 500 mL reactor, and heating was started while stirring under a nitrogen gas flow. 0.48 mL of an IPA solution of a 1,3-divinyl-1,1,3,3-tetramethyldisiloxane platinum complex (Pt concentration: 0.75 mass%) was added to the mixture. After aging at 54 to 98°C for a total of five hours, with sampling for confirming the reaction rate performed midway, the reaction was almost complete, yielding 385.3 g of a light brown hazy liquid. Of this, 220 g was filtered using an activated carbon-supported depth filter, and as a result, 197 g {582 mPa·s (25C)} of a single polyether-modified silicone composition expressed by the average chemical structural formula: MD_{72.8}D^{(PE1)}_{4.8}M{^{(PE1)}=-C₃H₆O(EO)₁₁-Me} was obtained as a colorless, transparent liquid. The H₂C=CH/Si-H molar ratio during the hydrosilylation reaction was 1.30, and thus the excess amount of polyether in the polyether-modified silicone composition was calculated to be 8.5 mass%.

### Reference Example 4 Preparation of Single Polyether-Modified Silicone Composition

The same experiment was repeated charging 90% of the total amount of main raw materials used in Reference Example 3. However, when 0.30 mL of a 5 mass% CPA in IPA solution was used as a hydrosilylation catalyst, and the reaction was performed at a reaction temperature of 60 to 102°C for a total of four hours, the reaction was complete, yielding 344.3 g of a light brown hazy liquid. As a result of filtering this in the same manner as in Reference Example 3, 317 g of a single polyether-modified silicone composition expressed by the average chemical structural formula: MD_{72.8}D^{(PE)}_{4.8}M{^{(PE)}=-C₃H₆O(EO)₁₁-Me} was obtained as a colorless, transparent liquid.

### Reference Example 5 Preparation of Single Polyether-Modified Silicone Composition

40.93 parts by mass of Si-H group-containing dimethylpolysiloxane expressed by the design average chemical structural formula: MD_{108.4}D^{H}_{8.1}M and 59.07 parts by mass of an allyl-terminated polyether expressed by the design average chemical structural formula: H₂C=CH-CH₂-O(EO)₁₁-Me were charged into a reactor, and heating was started while stirring under a nitrogen gas flow. After adding 200 ppm by mass of a 5 mass% CPA in IPA solution and aging at 60 to 85°C for two hours, the reaction was almost complete. This was filtered through a filter with a 1 µm pore diameter, and as a result, 99 parts by mass of a single polyether-modified silicone composition expressed by the average chemical structural formula: MD_{108.4}D^{(PE)}_{8.1}M{^{(PE)}=-C₃H₆O(EO)₁₁-Me} was obtained as a pale yellowish-brown, nearly transparent liquid. The H₂C=CH/Si-H molar ratio during the hydrosilylation reaction was 1.33, and thus the excess amount of polyether in the polyether-modified silicone composition was calculated to be 10.2 mass%.

### Reference Example 6 Preparation of Amide Polyether Group-Containing Silicone Composition by Previously Reported Method (See Paragraph 0011)

32.3 parts by mass of the polyether-modified silicone composition of Reference Example 5, 40.84 parts by mass of D₄, 4.74 parts by mass of a hydrolysis condensate of 3-aminopropylmethyldiethoxysilane, and 300 ppm by mass of an 11N KOH aqueous solution were charged into a reactor, and heating was started while stirring under a nitrogen gas flow. After performing the reaction at 147 to 152°C for one hour, 200 ppm by mass of acetic acid was added to neutralize an alkali catalyst. Furthermore, stripping was performed at 142 to 150°C and 30 Torr for 2.5 hours, followed by cooling to 75°C or lower and repressurization to obtain an intermediate amino/polyether-modified silicone composition. Thereto, 22.36 parts by mass of POE(4.5) lauryl ether acetate solution (containing 92 mass% of an active component, 7.5 mass% of water, and 0.5 mass% of NaCl) was added, and after an ambient pressure amidation reaction process at 123 to 127°C for three hours, the mixture was cooled to 75°C or lower and filtered to obtain 91 parts of an amide polyether group-containing silicone composition by a previously reported manufacturing method as a light brown, almost transparent liquid {1320 mPa·s (25C)}. The COOH/NH₂ molar ratio during the amidation reaction was calculated to be 1.26, and the excess amount of polyether in the composition was calculated to be 3.4 mass%.

### Reference Example 7 Preparation of High-Purity Amino/Amide/Single Polyether-Modified Silicone Composition

154.25 g of the single polyether-modified silicone composition of Reference Example 3, 130.78 g of D₄, 18.24 g of a hydrolysis condensate of 3-aminopropylmethyldiethoxysilane, and 0.12 g of a 43% KOH aqueous solution were charged into a 500 mL reactor, and heating was started while stirring under a nitrogen gas flow. After performing sampling for confirming the viscosity partway, an equilibration reaction was performed at 140 to 156°C for three hours, followed by cooling to 75°C and adding 0.34 g of acetic acid to neutralize an alkali catalyst. Thereafter, stripping was performed at 146 to 163°C and 40 to 45 Torr for two hours, followed by repressurization and sampling to obtain 265.8 g of an intermediate amino/polyether-modified silicone composition as a semi-transparent liquid {1838 mPa·s (25C)}. Thereto, 35.8 g of a POE(4.5) lauryl ether acetate solution (containing 92 mass% of an active component, 7.5 mass% of water, and 0.5 mass% of NaCl) was added, and reducing the pressure in the system was started. After a 4-hour amidation reaction at 122 to 128°C and 30 Torr, cooling to 90°C or lower was performed, followed by repressurization and filtration using a depth filter to obtain 244 g of a high-purity amino/amide/single polyether-modified silicone composition as a yellow transparent liquid {2012 mPa·s (25C)}. The COOH/NH₂ molar ratio during the amidation reaction was calculated to be 0.54, and the excess amount of polyether in the final composition was calculated to be 3.9 mass%.

### Reference Example 8 Preparation of High-Purity Amino/Amide/Single Polyether-Modified Silicone Composition

154.24 g of the single polyether-modified silicone composition of Reference Example 4, 127.54 g of D₄, 18.25 g of a hydrolysis condensate of 3-aminopropylmethyldiethoxysilane, and 0.13 g of a 43% KOH aqueous solution were charged into a 500 mL reactor, and heating was started while stirring under a nitrogen gas flow. After performing sampling for confirming the viscosity partway or the like, an equilibration reaction was performed at 146 to 158°C for six hours, followed by cooling to 64°C and adding 0.30 g of acetic acid to neutralize an alkali catalyst. Thereafter, stripping was performed at 142 to 150°C and 7 to 8 Torr for 1 hour and 40 minutes, followed by repressurization and sampling to obtain 234 g of an intermediate amino/polyether-modified silicone composition as a slightly yellowish, almost transparent liquid {1363 mPa·s (25C)}. Thereto, 31.57 g of a POE(4.5) lauryl ether acetate solution (containing 92 mass% of an active component, 7.5 mass% of water, and 0.5 mass% of NaCl) was added, and reducing the pressure in the system was started. After a 4-hour amidation reaction at 118 to 125°C and 8 to 9 Torr, cooling to 90°C or lower was performed, followed by repressurization and filtration using a depth filter to obtain 233.8 g of a high-purity amino/amide/single polyether-modified silicone composition as a yellow transparent liquid {1767 mPa·s (25C)}. The COOH/NH₂ molar ratio during the amidation reaction was calculated to be 0.54, and the excess amount of polyether in the final composition was calculated to be 3.9 mass%.

### Reference Example 9 Preparation of Amino/Two-Type Polyether-Modified Silicone Composition (Intermediate)

The amino/two-type polyether-modified silicone composition {723 mPa·s (25C)} collected during the preparation of Example 1 (composition of the present invention) described below was treated as Reference Example 9.

### Example 1 Preparation of Amino/Amide/Two-Type Polyether-Modified Silicone Composition

142.95 g of the two-type polyether-modified silicone composition of Reference Example 1, 92.02 g of D₄, 15.09 g of a hydrolysis condensate of 3-aminopropylmethyldiethoxysilane, and 0.11 g of a 43% KOH aqueous solution were charged into a 500 mL reactor, and heating was started while stirring under a nitrogen gas flow. After performing sampling for confirming the viscosity partway or the like, an equilibration reaction was performed at 146 to 155°C for six hours, followed by cooling to 78°C and adding 0.32 g of acetic acid to neutralize an alkali catalyst. Thereafter, stripping was performed at 151 to 153°C and 27 Torr for one hour, followed by cooling, repressurization, and sampling to obtain 200.6 g of an intermediate amino/two-type polyether-modified silicone composition as a pale-yellow semi-transparent liquid {723 mPa·s (25C)}. Thereto, 26.45 g of a POE(4.5) lauryl ether acetate solution (containing 92 mass% of an active component, 7.5 mass% of water, and 0.5 mass% of NaCl) was added, and reducing the pressure in the system was started. After a 6-hour amidation reaction at 116 to 122°C and 21 to 25 Torr, cooling to 95°C or lower was performed, followed by repressurization and filtration using a depth filter to obtain 200.2 g of the amino/amide/two-type polyether composite-modified silicone composition of the present invention as a pale cannella-colored transparent liquid {913 mPa·s (25C)}. The COOH/NH₂ molar ratio during the amidation reaction was calculated to be 0.54, and the excess amount of polyether in the final composition was calculated to be 3.1 mass%.

### Example 2 Preparation of Amino/Amide/Two-Type Polyether-Modified Silicone Composition

71.05 g and 70.09 of the two-type polyether-modified silicone compositions of Reference Examples 1 and 2, in order, 91.02 g of D₄, 14.88 g of a hydrolysis condensate of 3-aminopropylmethyldiethoxysilane, and 0.12 g of a 43% KOH aqueous solution were charged into a 500 mL reactor, and heating was started while stirring under a nitrogen gas flow. An equilibration reaction was performed at 141 to 155°C for five hours, followed by cooling to 74°C and adding 0.37 g of acetic acid to neutralize an alkali catalyst. Subsequently, the pressure was reduced to 30 Torr, and the stripping process was initiated. The low-boiling point removal process was ended when the temperature reached 154°C. After cooling, repressurization, and sampling, 222 g of the intermediate amino/two-type polyether-modified silicone composition was obtained {688 mPa·s (25C)}. Thereto, 29.43 g of a POE(4.5) lauryl ether acetate solution (containing 92 mass% of an active component, 7.5 mass% of water, and 0.5 mass% of NaCl) was added, and reducing the pressure in the system was started. After a 5-hour amidation reaction at 117 to 120°C and 5 to 10 Torr, cooling to 70°C or lower was performed, followed by repressurization and filtration using a depth filter to obtain 219 g of the amino/amide/two-type polyether composite-modified silicone composition of the present invention as a dark ocre jaure-colored transparent liquid {920 mPa·s (25C)}. The COOH/NH₂ molar ratio during the amidation reaction was calculated to be 0.54, and the excess amount of polyether in the final composition was calculated to be 3.9 mass%.

### Comparative Example 1 Changes Over Time of Amide Polyether Group-Containing Silicone Composition of Reference Example 6

The amide polyether group-containing silicone composition obtained in Reference Example 6 was stored in a container with a lid (to the extent of 40% of the container volume), nitrogen gas was sealed therein, and the container was stored at ambient temperature for 40 days. Thereafter, upon opening the package and examining the contents, it was found that the liquid had changed to a cloudy liquid with a non-uniform appearance, and the presence of suspended gel particles was also observed. Therefore, 1 kg was collected therefrom and filtered using a depth filter, yielding 976 g of a pale yellowish-brown semi-transparent liquid amide polyether group-containing silicone composition {2060 mPa·s (25C)}.

### Comparative Example 2 Preparation of Amide Polyether Group-Containing Silicone Composition by Previously Reported Method (See Paragraph 0011)

154.23 g of the polyether-modified silicone composition of Reference Example 4, 127.53 g of D₄, 18.24 g of a hydrolysis condensate of 3-aminopropylmethyldiethoxysilane, and 0.12 g of a 43% KOH aqueous solution were charged into a 500 mL reactor, and heating was started while stirring under a nitrogen gas flow. After performing sampling for confirming the viscosity partway or the like, an equilibration reaction was performed at 146 to 163°C for six hours, followed by cooling to 65°C and adding 0.33 g of acetic acid to neutralize an alkali catalyst. Thereafter, stripping was performed at 131 to 159°C and 28 to 31 Torr for 1 hour and 40 minutes, followed by repressurization and sampling to obtain 242 g of an intermediate amino/polyether-modified silicone composition as a pale yellowish-white cloudy liquid {1657 mPa·s (25C)}. Thereto, 67.66 g of POE(4.5) lauryl ether acetate solution (containing 92 mass% of active component, 7.5 mass% of water, and 0.5 mass% of NaCl) was added, and after an ambient pressure amidation reaction step at 122 to 127°C for three hours, the mixture was cooled to room temperature to obtain 296 g of the amide polyether group-containing silicone composition according to a previously reported method as a yellow transparent liquid {3970 mPa·s (25C)}. The COOH/NH₂ molar ratio during the amidation reaction was calculated to be 1.26, and the excess amount of polyether in the composition was calculated to be 3.5 mass%.

Table 1 below summarizes the relationship between the average chemical structure and viscosity of the examples and several reference and comparative example samples based on NMR analysis and reaction rate tests during synthesis experiments. Herein, the amount of each structural unit is shown in moles, assuming that the total of M units and M^{OR'} units is 2.00 moles.

**Table 1. Average chemical structure of samples**

| [Table 1] | | | | | | | | | |
|---|---|---|---|---|---|---|---|---|---|
| Segment | D (p) | D^{(AM)} (q) | D^{(AMD)} (r) | D^{(PE1)} (s) | D^{(PE2)} (w) | M/M^{OR'} | COO⁻ /~ Si-OCO~ | T | Viscosity (25C) |
| Example 1 | 88.9 | 2.4 | 3.0 | 5.2 | 1.1 | 1.47/0.53 | 0.0 | 0.38 | 913 |
| Example 2 | No data | <= | <= | 5.0 | 1.3 | No data | <= | <= | 920 |
| Reference Example 7* | 136.7 | 2.5 | 3.5 | 4.2 | - | 1.35/0.65 | 0.2 | 0.14 | 2012 |
| Reference Example 8 * | 116.6 | 2.8 | 3.6 | 4.5 | - | 1.25/0.75 | 0.0 | 0.36 | 1767 |
| Comparative Example 1 | 103.0 | 3.5 | 2.0 | 2.3 | - | 0.51/1.49 | 4.4 | No. data | 1320 => 2060 |
| Comparative Example 2 | 118.6 | 2.3 | 4.4 | 3.8 | - | 1.26/0.74 | 3.6 | 0.22 | 3970 |

| | | | | | | | | | |
|---|---|---|---|---|---|---|---|---|---|
| *Reference examples 7 and 8 are not known co-modified silicones, and unlike the examples of the present application, a second polyether-modified group is not provided. Therefore, the following tables are provided to clarify comparisons of viscosity and the like, and the technical significance of the present invention. In the following table, an asterisk (*) is added. | | | | | | | | | |

Comparative Example 1 (or Reference Example 6) and Comparative Example 2 indicated significant variability in viscosity and M^{OR'} amount, despite having very similar target average chemical structures. Therefore, it became clear that, under the conditions of the previously reported ambient pressure amidation reaction, amino/amide polyether/polyether-modified silicones with a structure in which both terminals of a polysiloxane main chain are blocked with trimethylsilyl groups cannot be manufactured. Furthermore, Reference Examples 7 and 8, which reduced the excess carboxyl groups, yielded a more stable final product viscosity than the comparative examples. In contrast, Examples 1 and 2, which reduced excess carboxyl groups and introduced the low molecular weight second polyether, were found to have the further advantage of extremely little batch-to-batch variation in product viscosity. In addition, the viscosity is lower than the samples used in the reference examples, and thus handling properties are excellent.

In other words, the present inventors discovered that co-modified silicones and compositions thereof can maintain low viscosity and exhibit excellent viscosity reproducibility between batches, thereby achieving high purity, favorable handling properties, and production stability simultaneously, only when four conditions are met: a short average polysiloxane chain length, a low M^{OR'} amount, a small total number of moles of carboxylate groups and acyloxy groups, and the presence of a low molecular weight second polyether group intramolecularly together with the first polyether group.

Table 2 below summarizes the variation percentage from the average initial viscosity (assumed to be the target value) for two batches each of the examples, reference examples, and comparative examples.

**Table 2. Viscosity variation relative to target value**

| [Table 2] | | | |
|---|---|---|---|
| Segment | Target value (Average value) | Initial viscosity (25C) | Change% from target |
| Example 1 | 916.5 | 913 | -0.38 |
| Example 2 | | 920 | +0.38 |
| Reference Example 7* | 1889.5 | 2012 | +6.48 |
| Reference Example 8* | | 1767 | -6.47 |
| Comparative Example 1 | 2645 | 1320 (Reference Example 6) | -50.1 |
| Comparative Example 2 | | 3970 | +50.1 |

The two batches of the examples were found to have even smaller viscosity variation between batches as compared to the two batches in the reference examples, due to the effect of introducing the low molecular weight second polyether. Furthermore, the two batches in the reference example could greatly suppress viscosity variations between batches as compared to the two batches of the comparative examples, due to the effect of reducing of excess carboxyl groups.

Table 3 below summarizes the general physical properties of the examples and several reference and comparative example samples. Regarding appearance (transparency) and viscosity, data for long-term storage at room temperature are also provided. Note that in the table, ND means not detected or below the detection limit. The amount of D₄/D₅/D₆ is the result of analysis by gas chromatography (for the examples, headspace gas chromatography with improved detection sensitivity due to baseline stabilization), and NH₂% is the result of analysis by neutralization titration using dilute hydrochloric acid (unit: mass%).

**Table 3. General physical properties of each sample and changes thereof**

| [Table 3] | | | | | |
|---|---|---|---|---|---|
| Segment | Appearance (transparency) | Color (GVS) | NH₂% | D₄/D₅/D₆ [%] | Viscosity (25C) |
| Example 1 | Almost transparent => | 5 to 6 | 0.34 | 0.01/0.002/0.002 | 913 => 992 (2 months) |
| | Semi-transparent (3 months) | | | | |
| Example 2 | Semi-transparent => | 9 | 0.33 | 0.009/0.003/0.003 | 920 => 898 (1 month) |
| | Semi-transparent (1 month) | | | | |
| Reference Example 7* | Transparent => Transparent (10 months) | 5 to 6 | 0.34 | 0.06/ND/ND | 2012 => 1713 (10 months) |
| Reference Example 8* | Transparent => Transparent (8 months) | 7 to 8 | 0.37 | ND/ND/ND | 1767 => 2144 (8 months) |
| Comparative Example 1 | Transparent => Non-transparent (7 months) | 3 | 0.43 | 1.8/0.95/0.53 | 1320 (Reference Example 6) => 2060 (40 days) |
| Comparative Example 2 | Transparent => Non-transparent (3 months) | 3 | 0.31 | 0.21/0.28/0.22 | 3970 => 5150 (8 months) |

Examples 1 and 2 maintained low viscosity and favorable handling properties during storage for 1 to 3 months. Furthermore, there was little change in the appearance transparency. In other words, the examples surpass the quality instability of the comparative examples. Furthermore, while the comparative examples failed to achieve the target of having tetramers, pentamers, or hexamers of cyclic dimethylsiloxane at 0.10% or less for each, both Example 1 and Example 2 achieved this target.

For the light, transparent liquid cleaning agent compositions represented by the formulations in Table 4 below, 0.67 mass% of the samples from Examples 1 and 2 and Comparative Example 2 were added, and the mixture was dissolved by heating at 40°C for one hour while shaking 2-3 times during the process, thereby preparing the comparative and the transparent liquid cleaning agent compositions of the present invention.

**Table 4. Examples of light, transparent liquid cleaning agent compositions**

| [Table 4] | | |
|---|---|---|
| Function name | Component name | Added amount (mass%) |
| Balancing agent | Ion-exchanged water | 70.47 |
| Nonionic surfactant | POE(9) Secondary Alcohol (C_{11 to 15}) Ether | 17.0 |
| Chelating agents | Citric acid | 1.0 |
| pH adjuster | Monoethanolamine | 1.0 |
| Antifreezing agent | Diethylene glycol monobutyl ether | 2.0 |
| Antifreezing agent | Ethanol | 2.0 |
| Antifreezing agent | Propylene glycol | 2.0 |
| Nonionic surfactant | POE(3) Secondary Alcohol (C_{12 to 14}) Ether | 2.0 |
| Antibacterial agent | Phenoxyethanol | 1.5 |
| Fiber lubricant | Silicone composition of Comparative Example 2 | 0.33 |
| Preservative | Preservative | 0.3 |
| Fragrance | Fragrance | 0.2 |
| Enzyme | Enzyme | 0.2 |

Table 5 below summarizes the stability test results for the various transparent liquid cleaning agent compositions described above.

**Table 5. Changes in appearance of transparent liquid cleaning agent compositions (40°C, 1 month)**

| [Table 5] | | | | |
|---|---|---|---|---|
| Segment | Added additives | INITIAL | 40°C, 1 week | 40°C, 1 month |
| Example 3 | Example 1 | Transparent liquid | Transparent liquid | Transparent liquid |
| Example 4 | Example 2 | Transparent liquid | Transparent liquid | Transparent liquid |
| Comparative Example 3 | Comparative Example 2 | Transparent liquid | Transparent liquid | Almost transparent liquid |
| Comparative Example 4 | N/A | Transparent liquid | Transparent liquid | Transparent liquid |

The additives in Example 1 and Example 2 were found to be stably and transparently dissolved in the light, transparent liquid cleaning agent compositions, and it was confirmed that the additives did not impair the appearance transparency at all even after being stored at 40°C for one month.

Table 6 below summarizes the calculation results of the molar ratio of oxyethylene groups to Si- CH₃ groups based on NMR analysis of Example 1.

**Table 6. EO/SiMe ratio of Example 1**

| [Table 6] | |
|---|---|
| Segment | EO/SiMe molar ratio |
| Example 1 | 0.44 |

Table 7 below summarizes the relationship between the calculated average chemical structure of Reference Example 9 and the viscosity thereof, on the basis of NMR analysis and reaction rate tests during synthesis experiments. Herein, the amount of each structural unit is shown in moles, assuming that the total of M units and M^{OR'} units is 2.00 moles.

**Table 7. Average chemical structure of Reference Example 9**

| [Table 7] | | | | | | | |
|---|---|---|---|---|---|---|---|
| Segment | D (t) | D^{(AM)} (u) | D^{(PE1)} (v) | D^{(PE2)} (x) | M/M^{OR'} | T | Viscosity (25C) |
| Reference Example 9 | 80 | 5.7 | 5.2 | 1.1 | 1.4/0.6 | 0.25 | 723 |

### SUMMARY

As indicated in the examples, the co-modified silicones and compositions thereof having amino/amide/two-type polyether-modified groups, which have four structural characteristics-a short average polysiloxane chain length within a prescribed range, a low M^{OR'} amount, a low M:M^{OR'} molar ratio within a prescribed range, a small total number of moles of carboxylate groups and acyloxy groups, and the presence of a low molecular weight second polyether group together with the first main polyether group-have low viscosity, and the viscosity increase thereof can be suppressed, allowing for maintenance and control including handling workability. Furthermore, since the co-modified silicones and compositions thereof exhibit excellent viscosity reproducibility between batches, high purity, favorable handling properties, and production stability can be achieved simultaneously. The co-modified silicones and compositions, when incorporated into a transparent liquid cleaning agent, do not impede or only slightly impede the transparent appearance of the cleaning agent, and can be used as a softener component, fiber lubricant component, texture-improving component, or fiber surface coating component. The viscosity is also low, and thus handling properties are excellent when manufacturing a transparent liquid cleaning agent. The amount of impurities is low, and therefore, it is possible to increase the amount of the composition added to a transparent liquid cleaning agent, which has the advantage of enhancing the commercial appeal of the transparent liquid cleaning agent.

## Claims

1. A co-modified silicone expressed by the following average structural formula:
MDₚD(AM)_{q}D^{(AMD)}ᵣD^{(PE1)}ₛD^{(PE2)}_{w}M^{OR'} Tx (1)
[where M represents an R₃SiO_{1/2} unit, D represents an R₂SiO unit, D^{(AM)} represents an RR¹SiO unit, D^{(AMD)} represents an RR²SiO unit, D^{(PE1)} represents an RR³SiO unit, D^{(PE2)} represents an RR⁸SiO unit, M^{OR'} represents an R₂(OR')SiO_{1/2} unit, T represents a siloxy unit expressed by R₃SiO_{3/2}, each p, q, r, s, w is a positive number, the relationship 50 ≤ p + q + r + s + w ≤ 160 is satisfied, x is a number in the range from 0 to 1, and the molar ratio M:M^{OR'} is in the range from 1.7:0.3 to 1.2:0.8;
R represents an alkyl group with 1 to 12 carbon atoms;
R¹ represents an aminoalkyl group (1 to 6 carbon atoms);
R² represents a group expressed by -R⁴-NHCO-(CH₂)_{b}-O(C₂H₄O)_{c}-R⁵ (where R⁴ represents an alkylene group with 1 to 6 carbon atoms, R⁵ represents a monovalent hydrocarbon group with 1 to 18 carbon atoms, b is a number in the range from 1 to 6, and c is a number in the range from 2 to 20);
R³ represents a group expressed by -R⁶-O-(C₂H₄O)_{d}(C₃H₆O)ₑ-R⁷ (where R⁶ represents an alkylene group with 2 to 8 carbon atoms, R⁷ represents an alkyl group with 1 to 12 carbon atoms, d is a number in the range from 3 to 25, e is a number in the range from 0 to 10, and if e is not 0, the relationship d/e ≥ 7/3 is satisfied);
R⁸ represents a group expressed by -R⁶-O-(C₂H₄O)_{f}(C₃H₆O)_{g}-R⁷ (where R⁶ and R⁷ are the same groups as above, f and g are numbers from 0 to 4, and the relationship 1 ≤ f + g ≤ 4 is satisfied);
OR' is a group selected from hydroxyl groups, alkoxy group-containing groups, and acyloxy group-containing groups; and
furthermore, when the total number of moles of M and M^{OR'} is 2.0, the total number of moles of carboxylate groups and acyloxy groups in a molecule is 1.0 or less].

2. The co-modified silicone according to claim 1, wherein the number x of siloxy units expressed by T in the average structural formula (1) is in the range from 0.01 to 0.70.

3. A co-modified silicone composition, comprising the co-modified silicone according to claim 1, and further comprising a polyether compound expressed by the following average structural formula:
Z-O-(C₂H₄O)_{d}(C₃H₆O)ₑ-R⁷ (2)
[where Z is a group selected from alkenyl groups with 2 to 8 carbon atoms or a hydrogen atom, and R⁷, d, and e are defined as described above],
in an amount of 5 parts by mass or less with the sum of the co-modified silicone compound and the polyether compound being 100 parts by mass.

4. The co-modified silicone composition according to claim 3, wherein the ratio of moles of oxyethylene (C₂H₄O) groups relative to 1 mole of Si-R groups in the composition is in the range from 0.2 to 0.6.

5. The co-modified silicone composition according to claim 3, wherein the amount of aminoalkyl groups in the composition is in the range from 0.1 to 0.6 mass%.

6. The co-modified silicone composition according to claim 3, wherein the amount of each of a tetra- to hexamer cyclic dimethylsiloxane is 0.1 mass% or less of the total composition.

7. A liquid cleaning agent, comprising the co-modified silicone according to claim 1 or 2 or the co-modified silicone composition according to any one of claims 3 to 6.

8. A liquid cleaning agent according to claim 7, which is a transparent concentrated liquid cleaning agent for laundering or a transparent liquid cleaning agent, wherein the co-modified silicone according to claim 1 or 2 or the co-modified silicone composition according to any one of claims 3 to 6 is incorporated as one or more component of a softener component, a fiber lubricant component, a texture-improving component, and a fiber surface coating component.

9. The liquid cleaning agent according to claim 7, comprising:
(I) a cleaning organic nonionic surfactant having a polyoxyethylene group (with an average number of oxyethylene repetitions in the range from 3 to 16), in the range from 10 to 60 mass% of the total liquid cleaning agent;
(II) at least one freezing inhibitor selected from (II-1) to (II-3) below, in the range from 2 to 20 mass% of the total liquid cleaning agent
(II-1) saturated monohydric alcohols with 2 to 4 carbon atoms,
(II-2) glycol ethers monosubstituted with an alkyl group with 1 to 6 carbon atoms (provided that the glycol ether contains an oxyethylene group and/or an oxypropylene group, and the number of repetitions thereof is in the range from 1 to 3), and
(II-3) di- or triol compounds selected from propylene glycol, dipropylene glycol, tripropylene glycol, triethylene glycol, tetraethylene glycol, trimethylene glycol, and glycerin;
(III) water in the range of 20 to 85 mass% of the total liquid cleaning agent; and
(IV) the co-modified silicone according to claim 1 or 2 or the co-modified silicone composition according to any one of claims 3 to 6, in the range from 0.3 to 3 mass% of the total liquid cleaning agent.

10. The liquid cleaning agent according to claim 9, further comprising (V) 0.1 to 15 mass% of a stabilizer selected from antibacterial agents (preservatives), hydrotropes, antioxidants, and water softeners (chelating agents) {provided that the total amount of components (I) to (V) is 100 mass%}.

11. The liquid cleaning agent according to claim 10, further comprising: (VI) 0.1 to 5 mass% of at least one anti-grime redeposition agent (anti-redeposition agent or dispersant); (VII) 0.1 to 6 mass% of a pH adjuster; (VIII) 0.1 to 2 mass% of a formulation of at least one enzyme selected from proteases, lipases, amylases, cellulases, esterases, pectinases, and mannanases; (IX) 1 to 150 ppm of a colorant; and (X) 10 to 6000 ppm of at least one aesthetic quality improver selected from 5 to 6000 ppm of a fragrance {provided that the total amount of (I) to (VIII) is 100 mass%}.

12. A method for manufacturing the liquid cleaning agent according to claims 9 to 11 containing the aforementioned components (I) to (IV) and optionally containing the aforementioned components (V) to (X), the method comprising dissolving the aforementioned components (I) to (VII) by heating and mixing at 40 to 80°C, then cooling to 30°C or lower, and then adding and mixing one or more type of component selected from components (VIII), (IX), and (X) to form a homogenized mixture.

13. A method for manufacturing the co-modified silicone according to claim 1 or 2 or the co-modified silicone composition according to any one of claims 3 to 6, the method comprising heating and mixing the components below to induce a reaction at 80 to 180°C under reduced pressure and an inert gas flow:
an amino/two-type polyether co-modified silicone expressed by the following average structural formula:
MDₜD^{(AM)}ᵤD^{(PE1)}ᵥD^{(PE2)}_{z}M^{OR'} Tx (3)
[where M represents R₃SiO_{1/2}, D represents R₂SiO, D^{(AM)} represents RR¹SiO, D^{(PE1)} represents an RR³SiO unit, D^{(PE2)} represents an RR⁸SiO unit, M^{OR'} represents R₂(OR')SiO_{1/2}, T represents a siloxy unit expressed by R₃SiO_{3/2}, each t, u, v, z is a positive number, the relationship 50 ≤ t + u + v + z ≤ 160 is satisfied, and x is a number in the range from 0 to 1;
the molar ratio M:M^{OR'} is in the range from 1.7:0.3 to 1.2:0.8;
R represent an alkyl group with 1 to 12 carbon atoms;
R¹ represents an aminoalkyl group with 1 to 12 carbon atoms;
R³ represents a group expressed by -R⁶-O-(C₂H₄O)_{d}(C₃H₆O)ₑ-R⁷ (where R⁶ represents an alkylene group with 2 to 8 carbon atoms, R⁷ represents an alkyl group with 1 to 12 carbon atoms, d is a number in the range from 3 to 25, e is a number in the range from 0 to 10, and if e is not 0, the relationship d/e ≥ 7/3 is satisfied);
R⁸ represents a group expressed by -R⁶-O-(C₂H₄O)_{f}(C₃H₆O)_{g}-R⁷ (where R⁶ and R⁷ are the same groups as above, f and g are numbers from 0 to 4, and the relationship 1 ≤ f + g ≤ 4 is satisfied); and
OR' is a group selected from hydroxyl groups, alkoxy group-containing groups, and acyloxy group-containing groups]; and
a polyether group-containing carboxylic acid expressed by the following average structural formula:
HOOC-(CH₂)_{b}-O(C₂H₄O)_{c}-R⁵ (4)
[where R⁵ represents a monovalent hydrocarbon group with 1 to 18 carbon atoms, b is a number in the range from 1 to 6, and c is a number in the range from 2 to 20], wherein
the reaction is performed such that the molar ratio (reaction ratio) of the aminoalkyl group in the amino/two-type polyether co-modified silicone expressed by formula (3) and the carboxyl group in the polyether group-containing carboxylic acid expressed by formula (4) satisfies the relationship 0.1 ≤ carboxyl group/aminoalkyl group ≤ 1.0.

14. The manufacturing method according to claim 13, wherein the number x of siloxy units expressed by T in the average structural formula (3) is in the range from 0.01 to 0.70.

15. The manufacturing method according to claim 13, wherein the polyether group-containing carboxylic acid expressed by the average structural formula (4) is reacted in the presence of an aqueous solution or water.
